# EUROPEAN PATENT APPLICATION

(11) **EP 4 422 255 A1**
(43) Date of publication of application: **28.08.2024**
(21) Application number: 22909694.6
(22) Date of filing: 30.11.2022
(51) Int. Cl.: H04W 24/08

(54) **COMMUNICATION METHOD AND COMMUNICATION APPARATUS**

(30) Priority: 03.12.2021 CN 202111470367
(71) Applicant: Huawei Technologies Co., Ltd., Shenzhen, Guangdong 518129 (CN)
(72) Inventor: ZHANG, Li, Shenzhen, Guangdong 518129 (CN); HAN, Jing, Shenzhen, Guangdong 518129 (CN); LI, Hong, Shenzhen, Guangdong 518129 (CN); SHEN, Zhongyi, Shenzhen, Guangdong 518129 (CN)
(74) Representative: Gill Jennings & Every LLP
(86) International application number: PCT/CN2022/135615
(87) International publication number: WO 2023/116379

(57) **Abstract**

This application provides a communication method and a communication apparatus. The method includes: receiving measurement configuration information from a network device, where the measurement configuration information includes a measurement object and a first measurement event associated with the measurement object, the measurement object is a carrier on which a first cell is located, and the first measurement event indicates that the first cell changes; determining, based on a first measurement result of measuring the first cell on the carrier, whether the first measurement event is triggered; and if the first measurement event is triggered, sending a measurement report to the network device, where the measurement report indicates that the first measurement event is triggered. In this application, a measurement event indicating that the first cell changes is defined, so that reporting is triggered based on the measurement event. This can reduce signaling overheads of measurement reporting and reduce power consumption of a terminal device.

## Description

This application claims priority to Chinese Patent Application No. 202111470367.6, filed with the China National Intellectual Property Administration on December 3, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In carrier aggregation (carrier aggregation, CA), a network device may configure one or more secondary cells (secondary cell, SCell) for a terminal device. In consideration of power consumption of the terminal device, the SCell includes two states: activated state and deactivated state. When an amount of to-be-sent and to-be-received data of the terminal device is relatively small, the network device may deactivate the SCell. When an amount of to-be-sent and to-be-received data of the terminal device is relatively large, the network may activate the SCell for data receiving and sending. The terminal device does not send or receive data on the deactivated SCell, and performs only periodic radio resource management (radio resource management, RRM) measurement, so that power consumption can be reduced. Generally, time (that is, activation time) for switching a to-be-activated SCell from a deactivated state to an activated state depends on whether the SCell is in a state KNOWN or a state UNKNOWN during activation. Compared with an SCell in a state UNKNOWN, an SCell in a state KNOWN may skip automatic gain control and coarse timing cell search, thereby greatly reducing the activation time. One condition for the activated SCell to be in a state KNOWN is that the terminal device reports a measurement result of the SCell within a period of time before the terminal device receives an activation command. Therefore, if the network expects the to-be-activated SCell to be in a state KNOWN, the terminal device needs to be configured to periodically measure and report the measurement result of the SCell. For example, the terminal device reports the measurement result every 3 seconds. However, this periodic measurement reporting manner increases signaling overheads and power consumption of the terminal device.

### SUMMARY

This application provides a communication method and a communication apparatus, to reduce signaling overheads and power consumption of a terminal device.

According to a first aspect, this application provides a communication method. The method is applied to a terminal device, and the method includes:
receiving measurement configuration information from a network device, where the measurement configuration information includes a measurement object and a first measurement event associated with the measurement object, the measurement object is a carrier on which a first cell is located, and the first measurement event indicates that the first cell changes;
determining, based on a first measurement result of measuring the first cell on the carrier, whether the first measurement event is triggered; and
if the first measurement event is triggered, sending a measurement report to the network device, where the measurement report indicates that the first measurement event is triggered.

In this application, the first measurement event indicating that the first cell changes is defined, so that the terminal device can report the measurement report corresponding to the first measurement event when a trigger condition of the first measurement event is met. Compared with periodic measurement reporting, this reduces signaling overheads of measurement reporting before the first cell is activated and reduces power consumption of the terminal device, and this can greatly reduce signaling overheads and power consumption of the terminal device especially when the terminal device is in a static or slow-moving state.

In a possible implementation, the method further includes:
receiving, from the network device, a command used to activate the first cell; and
determining a status of the first cell based on a trigger result of the first measurement event, where the status of the first cell includes a state KNOWN, a state UNKNOWN, or a state UNAVAILABLE.

In this application, the status of the first cell is determined based on the first measurement event, so that different activation manners are subsequently determined based on different states of the first cell to activate the first cell. For example, when determining that the first cell is in a state KNOWN, the terminal device may activate the first cell based on an activation manner corresponding to the state KNOWN. This can skip steps of automatic gain control and coarse timing cell search, and greatly reduce activation time. Based on this application, the network device does not need to associate measurement of an SCell with periodic measurement reporting to determine the status of the first cell, but determines the status of the first cell based on the first measurement event. The SCell is in a state KNOWN by default when the terminal device does not perform special reporting, and activation of the SCell meets a requirement for a faster activation delay. This improves availability of the SCell and reduces signaling overheads and power consumption of the terminal device.

In a possible implementation, that the first cell changes includes at least one of the following cases:
The first cell changes from detectable to undetectable, the first cell changes from undetectable to detectable, or a beam of the first cell changes.

In a possible implementation, the first measurement event indicates that the first cell changes from detectable to undetectable.

The determining, based on a first measurement result of measuring the first cell on the carrier, whether the first measurement event is triggered includes:
when the first measurement result of the first cell is less than or equal to a first preset threshold or the first cell is undetectable, determining that the first measurement event is triggered; or
when a second measurement result is greater than the first preset threshold or the first cell is detectable, and the first measurement result is less than or equal to the first preset threshold or the first cell is undetectable, determining that the first measurement event is triggered, where the second measurement result is a measurement result latest reported to the network device.

In a possible implementation, the first measurement event indicates that the first cell changes from undetectable to detectable.

The determining, based on a first measurement result of measuring the first cell on the carrier, whether the first measurement event is triggered includes:
when the first measurement result of the first cell is greater than a second preset threshold or the first cell is detectable, determining that the first measurement event is triggered; or
when a second measurement result is less than or equal to the second preset threshold or the first cell is undetectable, and the first measurement result is greater than the second preset threshold or the first cell is detectable, determining that the first measurement event is triggered, where the second measurement result is a measurement result latest reported to the network device.

In a possible implementation, the first measurement event indicates that the beam of the first cell changes.

The determining, based on a first measurement result of measuring the first cell on the carrier, whether the first measurement event is triggered includes:
when a beam measurement result of a first beam in a second measurement result is greater than a third preset threshold or the first beam is detectable, and a beam measurement result of the first beam in the first measurement result is less than or equal to the third preset threshold or the first beam is undetectable, determining that the first measurement event is triggered; or
when a beam measurement result of a second beam in the first measurement result is greater than the third preset threshold, and the second measurement result includes no beam measurement result of the second beam, determining that the first measurement event is triggered.

The second measurement result is a measurement result latest reported to the network device.

In a possible implementation, the first measurement event indicates that the first cell changes from detectable to undetectable.

The determining a status of the first cell based on a trigger result of the first measurement event includes:
if the first measurement event is not triggered, determining that the first cell is in a state KNOWN.

In a possible implementation, the first measurement event indicates that the first cell changes from detectable to undetectable.

The determining a status of the first cell based on a trigger result of the first measurement event includes:
if the first measurement event is triggered, determining that the first cell is in a state UNAVAILABLE.

In a possible implementation, the first measurement event indicates that the first cell changes from undetectable to detectable.

The determining a status of the first cell based on a trigger result of the first measurement event includes:
if the first measurement event is triggered, determining that the first cell is in a state KNOWN.

In a possible implementation, the first measurement event indicates that the first cell changes from detectable to undetectable.

The determining a status of the first cell based on a trigger result of the first measurement event includes:
if the first measurement event is not triggered, and a measurement cycle of the measurement object is less than or equal to a fourth preset threshold, determining that the first cell is in a state KNOWN; or
if the first measurement event is not triggered, and the measurement cycle of the measurement object is greater than the fourth preset threshold, determining that the first cell is in a state UNKNOWN.

In a possible implementation, the first measurement event indicates that the first cell changes from undetectable to detectable.

The determining a status of the first cell based on a trigger result of the first measurement event includes:
if the first measurement event is triggered, and a measurement cycle of the measurement object is less than or equal to a fourth preset threshold, determining that the first cell is in a state KNOWN; or
if the first measurement event is triggered, and the measurement cycle of the measurement object is greater than the fourth preset threshold, determining that the first cell is in a state UNKNOWN.

In a possible implementation, the method further includes:
receiving first information from the network device, where the first information indicates the terminal device to determine the status of the first cell based on the trigger result of the first measurement event.

In a possible implementation, the first cell includes a serving cell.

In a possible implementation, the first cell includes a non-serving cell; and the method further includes:
receiving second information from the network device, where the second information indicates the non-serving cell.

In a possible implementation, the measurement report includes the first measurement result.

According to a second aspect, this application provides a communication method. The method is applied to a network device, and the method includes:
determining measurement configuration information; and
sending the measurement configuration information to a terminal device, where the measurement configuration information includes a measurement object and a first measurement event associated with the measurement object, the measurement object is a carrier on which a first cell is located, and the first measurement event indicates that the first cell changes.

In a possible implementation, the method further includes:
sending, to the terminal device, a command used to activate the first cell.

In a possible implementation, that the first cell changes includes at least one of the following cases:
The first cell changes from detectable to undetectable, the first cell changes from undetectable to detectable, or a beam of the first cell changes.

In a possible implementation, the first measurement event indicates that the first cell changes from detectable to undetectable.

The method further includes:
when receiving no measurement report from the terminal device, determining that the first cell is in a state KNOWN.

In a possible implementation, the first measurement event indicates that the first cell changes from detectable to undetectable.

The method further includes:
when receiving a measurement report from the terminal device, determining that the first cell is in a state UNAVAILABLE.

In a possible implementation, the first measurement event indicates that the first cell changes from undetectable to detectable.

The method further includes:
when receiving a measurement report from the terminal device, determining that the first cell is in a state KNOWN.

In a possible implementation, the first measurement event indicates that the first cell changes from detectable to undetectable.

The method further includes:
when receiving no measurement report from the terminal device, and determining that a measurement cycle of the measurement object is less than or equal to a fourth preset threshold, determining that the first cell is in a state KNOWN; or
when receiving no measurement report from the terminal device, and determining that the measurement cycle of the measurement object is greater than the fourth preset threshold, determining that the first cell is in a state UNKNOWN.

In a possible implementation, the first measurement event indicates that the first cell changes from undetectable to detectable.

The method further includes:
when receiving a measurement report from the terminal device, and determining that a measurement cycle of the measurement object is less than or equal to a fourth preset threshold, determining that the first cell is in a state KNOWN; or
when receiving the measurement report from the terminal device, and determining that the measurement cycle of the measurement object is greater than the fourth preset threshold, determining that the first cell is in a state UNKNOWN.

In a possible implementation, the first measurement event indicates that the beam of the first cell changes.

The method further includes:
updating, based on the first measurement event, a beam used when the first cell is activated.

In this application, the network device determines, based on the first measurement event, a transmit beam used in an activation process, or determines a transmit beam used for scheduling the terminal device after activation. This helps improve communication quality. In this application, a new measurement event is defined, that is, the terminal reports whether a transmit beam of an SCell changes, so that the network can determine a specific transmit beam used during and after SCell activation. Considering that the terminal is in a static or slow-moving state in most cases, in this application, measurement reporting is reduced, that is, only when transmit beam information changes, the terminal performs reporting, and the network can control the quantity of reports by controlling a reporting threshold.

In a possible implementation, the method further includes:
sending first information to the terminal device, where the first information indicates the terminal device to determine a status of the first cell based on a trigger result of the first measurement event.

In a possible implementation, the first cell includes a serving cell.

In a possible implementation, the first cell includes a non-serving cell; and the method further includes:
sending second information to the terminal device, where the second information indicates the non-serving cell.

According to a third aspect, this application provides a communication apparatus, and the apparatus may be a terminal device. The apparatus includes:
a transceiver unit, configured to receive measurement configuration information from a network device, where the measurement configuration information includes a measurement object and a first measurement event associated with the measurement object, the measurement object is a carrier on which a first cell is located, and the first measurement event indicates that the first cell changes; and
a processing unit, configured to determine, based on a first measurement result of measuring the first cell on the carrier, whether the first measurement event is triggered.

The transceiver unit is configured to: if the first measurement event is triggered, send a measurement report to the network device, where the measurement report indicates that the first measurement event is triggered.

In a possible implementation, the transceiver unit is further configured to receive, from the network device, a command used to activate the first cell.

The processing unit is further configured to determine a status of the first cell based on a trigger result of the first measurement event, where the status of the first cell includes a state KNOWN, a state UNKNOWN, or a state UNAVAILABLE.

In a possible implementation, that the first cell changes includes at least one of the following cases:
The first cell changes from detectable to undetectable, the first cell changes from undetectable to detectable, or a beam of the first cell changes.

In a possible implementation, the first measurement event indicates that the first cell changes from detectable to undetectable.

The determining, based on a first measurement result of measuring the first cell on the carrier, whether the first measurement event is triggered includes:
when the first measurement result of the first cell is less than or equal to a first preset threshold or the first cell is undetectable, determining that the first measurement event is triggered; or
when a second measurement result is greater than the first preset threshold or the first cell is detectable, and the first measurement result is less than or equal to the first preset threshold or the first cell is undetectable, determining that the first measurement event is triggered, where the second measurement result is a measurement result latest reported to the network device.

In a possible implementation, the first measurement event indicates that the first cell changes from undetectable to detectable.

The determining, based on a first measurement result of measuring the first cell on the carrier, whether the first measurement event is triggered includes:
when the first measurement result of the first cell is greater than a second preset threshold or the first cell is detectable, determining that the first measurement event is triggered; or
when a second measurement result is less than or equal to the second preset threshold or the first cell is undetectable, and the first measurement result is greater than the second preset threshold or the first cell is detectable, determining that the first measurement event is triggered, where the second measurement result is a measurement result latest reported to the network device.

In a possible implementation, the first measurement event indicates that the beam of the first cell changes.

The determining, based on a first measurement result of measuring the first cell on the carrier, whether the first measurement event is triggered includes:
when a beam measurement result of a first beam in a second measurement result is greater than a third preset threshold or the first beam is detectable, and a beam measurement result of the first beam in the first measurement result is less than or equal to the third preset threshold or the first beam is undetectable, determining that the first measurement event is triggered; or
when a beam measurement result of a second beam in the first measurement result is greater than the third preset threshold, and the second measurement result includes no beam measurement result of the second beam, determining that the first measurement event is triggered.

The second measurement result is a measurement result latest reported to the network device.

In a possible implementation, the first measurement event indicates that the first cell changes from detectable to undetectable.

The determining a status of the first cell based on a trigger result of the first measurement event includes:
if the first measurement event is not triggered, determining that the first cell is in a state KNOWN.

In a possible implementation, the first measurement event indicates that the first cell changes from detectable to undetectable.

The determining a status of the first cell based on a trigger result of the first measurement event includes:
if the first measurement event is triggered, determining that the first cell is in a state UNAVAILABLE.

In a possible implementation, the first measurement event indicates that the first cell changes from undetectable to detectable.

The determining a status of the first cell based on a trigger result of the first measurement event includes:
if the first measurement event is triggered, determining that the first cell is in a state KNOWN.

In a possible implementation, the first measurement event indicates that the first cell changes from detectable to undetectable.

The determining a status of the first cell based on a trigger result of the first measurement event includes:
if the first measurement event is not triggered, and a measurement cycle of the measurement object is less than or equal to a fourth preset threshold, determining that the first cell is in a state KNOWN; or
if the first measurement event is not triggered, and the measurement cycle of the measurement object is greater than the fourth preset threshold, determining that the first cell is in a state UNKNOWN.

In a possible implementation, the first measurement event indicates that the first cell changes from undetectable to detectable.

The determining a status of the first cell based on a trigger result of the first measurement event includes:
if the first measurement event is triggered, and a measurement cycle of the measurement object is less than or equal to a fourth preset threshold, determining that the first cell is in a state KNOWN; or
if the first measurement event is triggered, and the measurement cycle of the measurement object is greater than the fourth preset threshold, determining that the first cell is in a state UNKNOWN.

In a possible implementation, the transceiver unit is further configured to:
receive first information from the network device, where the first information indicates the terminal device to determine the status of the first cell based on the trigger result of the first measurement event.

In a possible implementation, the first cell includes a serving cell.

In a possible implementation, the first cell includes a non-serving cell; and the transceiver unit is further configured to:
receive second information from the network device, where the second information indicates the non-serving cell.

In a possible implementation, the measurement report includes the first measurement result.

According to a fourth aspect, this application provides a communication apparatus, and the apparatus may be a network device. The apparatus includes:
a processing unit, configured to determine measurement configuration information; and
a transceiver unit, configured to send the measurement configuration information to a terminal device, where the measurement configuration information includes a measurement object and a first measurement event associated with the measurement object, the measurement object is a carrier on which a first cell is located, and the first measurement event indicates that the first cell changes.

In a possible implementation, the transceiver unit is further configured to:
send, to the terminal device, a command used to activate the first cell.

In a possible implementation, that the first cell changes includes at least one of the following cases:

The first cell changes from detectable to undetectable, the first cell changes from undetectable to detectable, or a beam of the first cell changes.

In a possible implementation, the first measurement event indicates that the first cell changes from detectable to undetectable.

The processing unit is further configured to:
when no measurement report is received from the terminal device, determine that the first cell is in a state KNOWN.

In a possible implementation, the first measurement event indicates that the first cell changes from detectable to undetectable.

The processing unit is further configured to:
when a measurement report is received from the terminal device, determine that the first cell is in a state UNAVAILABLE.

In a possible implementation, the first measurement event indicates that the first cell changes from undetectable to detectable.

The processing unit is further configured to:
when a measurement report is received from the terminal device, determine that the first cell is in a state KNOWN.

In a possible implementation, the first measurement event indicates that the first cell changes from detectable to undetectable.

The processing unit is further configured to:
when no measurement report is received from the terminal device, and it is determined that a measurement cycle of the measurement object is less than or equal to a fourth preset threshold, determine that the first cell is in a state KNOWN; or
when no measurement report is received from the terminal device, and it is determined that the measurement cycle of the measurement object is greater than the fourth preset threshold, determine that the first cell is in a state UNKNOWN.

In a possible implementation, the first measurement event indicates that the first cell changes from undetectable to detectable.

The processing unit is further configured to:
when a measurement report is received from the terminal device, and it is determined that a measurement cycle of the measurement object is less than or equal to a fourth preset threshold, determine that the first cell is in a state KNOWN; or
when the measurement report is received from the terminal device, and it is determined that the measurement cycle of the measurement object is greater than the fourth preset threshold, determine that the first cell is in a state UNKNOWN.

In a possible implementation, the first measurement event indicates that the beam of the first cell changes.

The processing unit is further configured to:
update, based on the first measurement event, a beam used when the first cell is activated.

In a possible implementation, the transceiver unit is further configured to:
send first information to the terminal device, where the first information indicates the terminal device to determine a status of the first cell based on a trigger result of the first measurement event.

In a possible implementation, the first cell includes a serving cell.

In a possible implementation, the first cell includes a non-serving cell; and the transceiver unit is further configured to:
send second information to the terminal device, where the second information indicates the non-serving cell.

According to a fifth aspect, this application provides a communication apparatus. The apparatus may be a terminal device, an apparatus in the terminal device, or an apparatus that can be used in combination with the terminal device. The communication apparatus may alternatively be a chip system. The communication apparatus may perform the method according to the first aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects thereof, refer to the method according to the first aspect and the beneficial effects thereof. Repeated parts are not described again.

According to a sixth aspect, this application provides a communication apparatus. The apparatus may be a network device, an apparatus in the network device, or an apparatus that can be used in combination with the network device. The communication apparatus may alternatively be a chip system. The communication apparatus may perform the method according to the second aspect. Functions of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects thereof, refer to the method according to the second aspect and the beneficial effects thereof. Repeated parts are not described again.

According to a seventh aspect, this application provides a communication apparatus. The apparatus may be a terminal device. The communication apparatus includes a processor and a transceiver. The processor and the transceiver are configured to execute a computer program or instructions stored in at least one memory, so that the apparatus implements the method according to any one of the first aspect.

According to an eighth aspect, this application provides a communication apparatus. The apparatus may be a terminal device. The communication apparatus includes a processor, a transceiver, and a memory. The processor, the transceiver, and the memory are coupled. The processor and the transceiver are configured to implement the method according to any one of the first aspect.

According to a ninth aspect, this application provides a communication apparatus. The apparatus may be a network device. The communication apparatus includes a processor and a transceiver. The processor and the transceiver are configured to execute a computer program or instructions stored in at least one memory, so that the apparatus implements the method according to any one of the second aspect.

According to a tenth aspect, this application provides a communication apparatus. The apparatus may be a network device. The communication apparatus includes a processor, a transceiver, and a memory. The processor, the transceiver, and the memory are coupled. The processor and the transceiver are configured to implement the method according to any one of the second aspect.

According to an eleventh aspect, this application provides a computer-readable storage medium. The storage medium stores a computer program or instructions, and when the computer program or the instructions are executed by a computer, the method according to either of the first aspect and the second aspect is implemented.

According to a twelfth aspect, this application provides a computer program product including instructions. The computer program product includes computer program code, and when the computer program code is run on a computer, the method according to either of the first aspect and the second aspect is implemented.

### BRIEF DESCRIPTION OF DRAWINGS

FIG. 1 is a diagram of a network architecture of a 5G system;
FIG. 2 is a schematic flowchart of a communication method according to an embodiment of this application;
FIG. 3 is another schematic flowchart of a communication method according to an embodiment of this application;
FIG. 4 is a diagram of a structure of a communication apparatus according to an embodiment of this application;
FIG. 5 is a diagram of a structure of another communication apparatus according to an embodiment of this application;
FIG. 6 is a diagram of a structure of another communication apparatus according to an embodiment of this application; and
FIG. 7 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. A term "and/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, a word such as "example" or "for example" indicates an example, an instance, or descriptions. Any embodiment or design scheme described as "example" or "for example" in this application should not be explained as being more preferred or having more advantages than another embodiment or design scheme. Exactly, use of the word such as "example" or "for example" is intended to present a related concept in a specific manner.

The technical solutions in embodiments of this application may be applied to various communication systems, for example, a code division multiple access (code division multiple access, CDMA) system, a wideband code division multiple access (wideband code division multiple access, WCDMA) system, a long term evolution (long term evolution, LTE) system, a universal mobile telecommunications system (universal mobile telecommunications system, UMTS), a 5th generation (5th generation, 5G) system, a new radio (new radio, NR) system, and a future communication system. This is not limited herein.

For ease of understanding, in embodiments of this application, a 5G system is used as an example to describe in detail network elements related to this application in the 5G system.

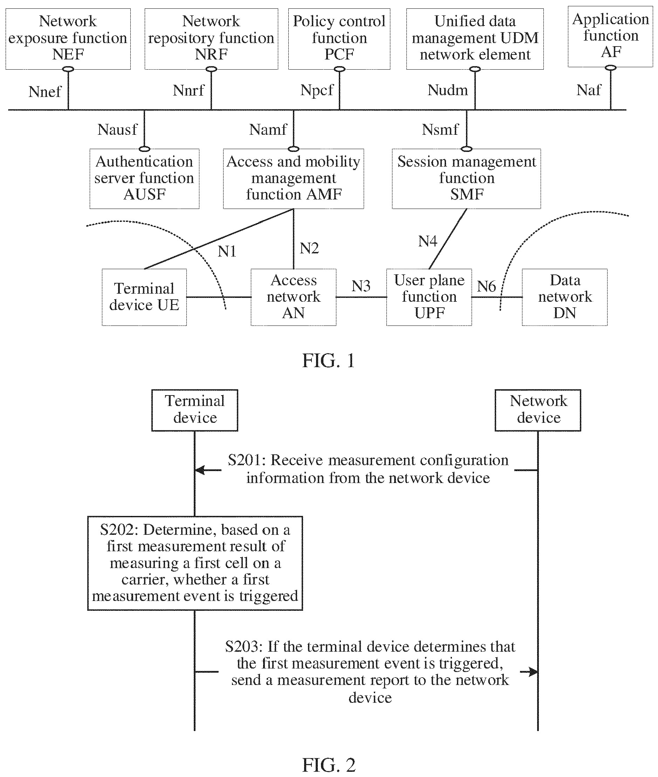

FIG. 1 is a diagram of a network architecture of a 5G system. As shown in FIG. 1, the network architecture may include a terminal device, a (radio) access network ((radio) access network, (R)AN), a core network (core network, CN), and a data network (data network, DN). The (R)AN (described as a RAN in the following) is configured to connect the terminal device to a wireless network, and the CN is configured to manage the terminal device and provide a gateway that communicates with the DN.

The following separately describes in detail the terminal device, the RAN, the CN, and the DN in FIG. 1.

### 1. Terminal device

The terminal device includes a device that provides voice and/or data connectivity for a user, for example, may include a handheld device having a wireless connection function or a processing device connected to a wireless modem. The terminal device may communicate with the core network through the radio access network. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, a user device, or the like. For example, the terminal device may include a mobile phone (or referred to as a "cellular" phone), a computer having a mobile terminal device, or a portable, pocket-sized, hand-held, or a computer built-in mobile apparatus. For example, the terminal device is a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), and another device. Alternatively, the terminal device may include a limited device, for example, a device with low power consumption, a device with a limited storage capability, or a device with a limited computing capability.

### 2. RAN

The RAN may include one or more RAN devices (in other words, access network devices), and an interface between the access network device and the terminal device may be a Uu interface (or referred to as an air interface). Certainly, in future communication, names of these interfaces may remain unchanged, or may be replaced by other names. This is not limited in this application.

The access network device is a node or a device that connects the terminal device to the wireless network. The access network device includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseband unit, BBU), a transmission reception point (transmission reception point, TRP), a transmission point (transmission point, TP), a mobile switching center, and the like. This is not limited herein.

### 3. CN

The CN may include one or more CN devices. The 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The AMF network element is a control plane network element provided by an operator network, and is responsible for access control and mobility management for accessing the operator network by the terminal device, for example, including mobility status management, allocation of a temporary user identity, user authentication and authorization, and other functions.

The SMF network element is a control plane network element provided by the operator network and is responsible for managing a PDU session of the terminal device. The PDU session is a channel for PDU transmission, and the terminal device needs to perform PDU transmission with the DN through the PDU session. The SMF network element is responsible for establishment, maintenance, deletion, and the like of the PDU session. The SMF network element includes session-related functions such as session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes functions related to a user plane, for example, data packet routing and transmission, packet detection, quality of service (quality of service, QoS) processing, lawful interception, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The AF network element is a function network element configured to provide various business services and can interact with the core network through another network element and interact with a policy management framework to perform policy management.

In addition, although not shown, the CN may further include other possible network elements, for example, a network exposure function (network exposure function, NEF) network element or a unified data repository (unified data repository, UDR) network element.

It should be noted that, in embodiments of this application, the access network device and the core network device may be collectively referred to as a network device.

### 4. DN

The DN, also be referred to as a packet data network (packet data network, PDN), is a network outside the operator network. The operator network may access a plurality of DNs. Application servers corresponding to a plurality of services may be deployed in the DN, to provide a plurality of possible services for the terminal device.

In FIG. 1, Npcf, Nudm, Naf, Namf, Nsmf, N1, N2, N3, N4, and N6 are interface sequence numbers. For meanings of these interface sequence numbers, refer to meanings defined in related standard protocols. This is not limited herein.

It may be understood that the 5G communication system is used as an example for illustration in FIG. 1. The solutions in embodiments of this application may be further applied to another possible communication system, for example, an LTE communication system or a future 6th generation (6th generation, 6G) communication system. The foregoing network elements or functions may be network elements in a hardware device, or may be software functions that are run on dedicated hardware, or may be virtualized functions instantiated on a platform (for example, a cloud platform). Optionally, the foregoing network elements or functions may be implemented by one device, or may be jointly implemented by a plurality of devices, or may be one function module in one device. This is not specifically limited in embodiments of this application.

The following explains and describes related technical features in embodiments of this application. It should be noted that these explanations are intended to make embodiments of this application easier to understand, but should not be considered as a limitation on the protection scope claimed in this application.

### 1. Carrier aggregation (carrier aggregation, CA)

The carrier aggregation is a technology that increases a transmission bandwidth to meet requirements for increasing a peak rate of a single user and a system capacity. The CA technology may aggregate two or more component carriers (component carrier, CC) of a base station, thereby implementing a larger transmission bandwidth and effectively improving uplink and downlink transmission rates. UE determines, based on a capability of the UE, a maximum quantity of carriers that can be simultaneously used for uplink and downlink transmission.

A primary cell (primary cell, PCell) is a cell in which the UE performs initial connection establishment, or a cell in which the UE performs radio resource control (radio resource control, RRC) connection reestablishment, or a primary cell specified in a handover process. The PCell is responsible for RRC communication with the UE. A CC corresponding to the PCell is referred to as a primary component carrier (primary component carrier, PCC). A secondary cell (secondary cell, SCell) is added through an RRC connection reconfiguration after an initial security activation procedure, to provide an additional radio resource. A CC corresponding to the SCell is referred to as a secondary component carrier (secondary component carrier, SCC).

In the CA, a network device may configure one or more SCells for a terminal device. In consideration of power consumption of the terminal device, the SCell has two states: activated state and deactivated state. When an amount of data of the terminal device is relatively large, the network device may activate the SCell for data receiving and sending. When the amount of data of the terminal device is relatively small, the network device may deactivate the SCell. The terminal device does not send or receive data on the deactivated SCell, and performs only periodic radio resource management (radio resource management, RRM) measurement. Therefore, a baseband radio frequency resource corresponding to the SCell can be disabled for a long period of time, to reduce power consumption. However, in consideration of burst of a data service, it is better to have shorter time for the SCell to switch from a deactivated state to an activated state, namely, activation time.

In an NR system, the activation time of the SCell depends on whether the SCell is in a state KNOWN or a state UNKNOWN during activation. Compared with activation of the SCell in a state UNKNOWN, activation of the SCell in a state KNOWN may skip automatic gain control, coarse timing cell search, and other actions, thereby greatly reducing the activation time.

### 2. Known and unknown

Herein, known may also be referred to as a state KNOWN, and unknown may also be referred to as a state UNKNOWN.

For example, in an implementation, conditions defined for an SCell in a state KNOWN and an SCell in a state UNKNOWN in TS38.133 are as follows:
(1) An SCell in a frequency band FR1 is known if the following conditions are met:
   1. In a max (5*measCycleSCell, 5*DRX cycles) time period prior to reception of an SCell activation command: the terminal has sent a valid measurement report related to an SCell, and a measured synchronization signal and physical broadcast channel (physical broadcast channel, PBCH) block (synchronization signal and PBCH block, SSB) is still detectable based on cell identification conditions specified in Clause 9.2 and Clause 9.3.
   2. According to the cell identification conditions specified in Clause 9.2 and Clause 9.3, the SSB measured in the period equal to max (5*measCycleSCell, 5*DRX cycles) also remains detectable during a cell activation delay.

Otherwise, the SCell in the frequency band FR1 is unknown.

Herein, measCycleSCell represents a measurement cycle of the SCell, and may be configured by the network device for the terminal device. Generally, a value of measCycleSCell may be 160 ms, 256 ms, 320 ms, 512 ms, 640 ms, 1024 ms, 1280 ms, or the like. This is not limited herein. DRX cycles represent discontinuous reception (discontinuous reception, DRX) cycles, or may be configured by the network device for the terminal device. Generally, a value of DRX cycles may be 10 ms, 20 ms, 32 ms, 40 ms, 60 ms, 64 ms, 70 ms, 80 ms, 128 ms, 160 ms, 256 ms, 320 ms, 512 ms, 640 ms, 1024 ms, 1280 ms, 2048 ms, 2560 ms, 5120 ms, 10240 ms, or the like. This is not limited herein.

(2) For 1^{st} activation of an SCell in a frequency band FR2, the SCell is known if the following conditions are met:
1. In a time period before the terminal receives a physical downlink control channel (physical downlink control channel, PDCCH) transmission configuration indicator (transmission configuration indicator, TCI), a physical downlink shared channel (physical downlink shared channel, PDSCH) TCI (when applicable), and a last activation command in a semi-persistent channel state information reference signal (channel state information reference signal, CSI-RS) (when applicable) reported for a channel quality indicator (channel quality indicator, CQI) (if the UE supports a power level 1, the time period is equal to 4s; and if the UE supports a power level 2/3/4, the time period is equal to 3 seconds), the UE has sent a valid L3-RSRP measurement report related to the SCell, where the measurement report includes an SSB index. The UE receives an SCell activation command no later than time when the UE receives a MAC-CE command for TCI activation after the L3-RSRP report is sent.
2. In a period from the L3-RSRP reporting to valid CQI reporting, an SSB corresponding to a reported index remains detectable based on the cell identification conditions specified in Clause 9.2 and Clause 9.3, and the activated TCI state is selected based on one of the latest reported SSB indexes.

Otherwise, a 1^{st} SCell in the frequency band FR2 is unknown.

In another implementation, in TS38.133, a condition in which a target cell is in a state KNOWN in a handover scenario is defined as follows:
In a (handover) interruption requirement, if a cell meets a related cell identification requirement in the last 5 seconds, the cell is known; otherwise, the cell is unknown. For details about the cell identification requirement, refer to Clause 9.2.5 "Intra-frequency handover" and Clause 9.3.4 "Inter-frequency handover".

### 3. Detectable and undetectable

Herein, detectable may also be referred to as visible, and undetectable may also be referred to as invisible. Generally, that a cell or a transmit beam (for example, an SSB) is detectable means that the terminal device can identify the cell or the beam. Generally, a condition in which a cell or a transmit beam is detectable is that a received signal to interference plus noise ratio and/or received power of the cell or the beam at the terminal device are/is greater than or equal to a threshold, for example, a threshold of a detectable signal to interference plus noise ratio and received power of an intra-frequency cell specified in Clause 9.2.2 in TS38.133. In an actual product, the terminal device may determine, based on an implementation of the terminal device, for example, a cell identification algorithm, whether a cell or a transmit beam is detectable. An implementation capability of the terminal device may exceed a specification in TS38.133. For example, when a received signal to interference plus noise ratio of a cell or a beam is lower than a threshold specified in TS38.133, the terminal device may still consider that the cell or the beam is detectable. In addition, undetectable means that the terminal device cannot identify a cell or a beam. Generally, a reason why a cell or a transmit beam is undetectable is that a received signal to interference plus noise ratio and/or received power of the cell or the beam at the terminal device are/is less than a threshold, for example, a threshold of a detectable signal to interference plus noise ratio and received power of an intra-frequency cell specified in Clause 9.2.2 in TS38.133.

Based on the definition of the conditions for the state KNOWN and the definition of the conditions for being detectable, it can be learned that being detectable is a necessary condition for KNOWN, but being detectable is not necessarily KNOWN.

### 4. Measurement events (Event)

The measurement events include intra-RAT events A1 to A5, inter-RAT events B1 and B2, and the like. Different events have different application scenarios, and corresponding reporting configuration requirements are different. The terminal device sends a measurement report to the network device only when detecting that a measurement result of a serving cell and/or a measurement result of a neighboring cell meet/meets a threshold that is set in a reporting configuration requirement.

The intra-RAT events A1 to A5 are respectively as follows:
The event A1 indicates that serving cell signal quality is higher than a specific threshold.

The event A2 indicates that serving cell signal quality is lower than a specific threshold.

The event A3 indicates that neighboring cell quality is higher than serving cell quality, and is used for coverage-based intra-frequency and inter-frequency handover.

The event A4 indicates that neighboring cell quality is higher than a specific threshold, is used for load-based handover, and can be used for load balancing.

The event A5 indicates that serving cell quality is lower than a specific threshold and neighboring cell quality is higher than a specified threshold, and can be used for load balancing.

The inter-RAT events B1 and B2 are respectively as follows:
The event B1 indicates that neighboring cell quality is higher than a specific threshold, and is used to measure a high-priority inter-RAT cell.

The event B2 indicates that serving cell quality is lower than a specified threshold and neighboring cell quality is higher than a specified threshold, and is used to measure an equal-priority or lower-priority inter-RAT cell.

For details, refer to Table 1 and Table 2.

**Table 1**

| Event | Description |
|---|---|
| Event A1 (Event A1) | Serving becomes better than threshold (Serving cell signal quality is higher than a threshold) |
| Event A2 (Event A2) | Serving becomes worse than threshold (Serving cell signal quality is lower than a threshold) |
| Event A3 (Event A3) | Neighbour becomes offset better than serving (Neighboring cell signal quality is higher than serving cell signal quality) |
| Event A4 (Event A4) | Neighbour becomes better than threshold (Neighboring cell signal quality is higher than a threshold) |
| Event A5 (Event A5) | Serving becomes worse than threshold1 and neighbour becomes better than threshold2 (Serving cell signal quality is lower than a threshold 1 and neighboring cell signal quality is higher than a threshold 2) |

**Table 2**

| Event | Description |
|---|---|
| Event B1 (Event B1) | Inter RAT neighbour becomes better than threshold (Inter-RAT neighboring cell signal quality is higher than a threshold) |
| Event B2 (Event B2) | Serving becomes worse than threshold1 and inter RAT neighbour becomes better than threshold2 (Serving cell signal quality is lower than a threshold 1 and inter-RAT neighboring cell signal quality is higher than a threshold 2) |

It should be noted that, in the related technology, a condition in which an SCell is known is based on the terminal that reports an L3 measurement result of the SCell in a period of time before the terminal receives an activation command. If the network expects the to-be-activated SCell to be in a state KNOWN, the terminal device needs to be configured to periodically measure and report the measurement result of the SCell. For example, the terminal device reports the measurement result every 3 seconds. However, this periodic measurement reporting manner increases signaling overheads and power consumption of the terminal device.

Based on this, this application proposes a communication method, so that the terminal device and the network device can determine a status of an SCell, for example, a state KNOWN, a state UNKNOWN, or a state ACTIVATION UNAVAILABLE, while signaling overheads and power consumption of the terminal device are reduced.

It should be noted that the communication method provided in this embodiment of this application is applicable to a cell activation scenario, for example, SCell activation; or is applicable to a cell handover (handover) scenario; or is applicable to a cell addition scenario, for example, a process of adding a primary secondary cell (primary secondary cell, PSCell); or the like. This is not limited herein. For ease of understanding, the following embodiments of this application are mainly described by using the cell activation scenario as an example.

The following describes in detail communication methods and communication apparatuses provided in this application.

FIG. 2 is a schematic flowchart of a communication method according to an embodiment of this application. As shown in FIG. 2, the communication method includes the following steps S201 to S203. The method shown in FIG. 2 may be performed by a terminal device and/or a network device, or the method shown in FIG. 2 may be performed by a chip in the terminal device and/or a chip in the network device, or the method shown in FIG. 2 may be performed by another device that can perform the method. This is not limited herein. For ease of description, a terminal device is used as an example for description below.

S201: The terminal device receives measurement configuration information from a network device.

It should be noted that, after the terminal device establishes a communication connection to the network device and enters a connected state, the network device needs to perform measurement configuration for the terminal device, so that the terminal device measures a cell based on the measurement configuration to obtain a measurement result of the cell, and provides a reference for radio resource configuration in a network.

Specifically, the network device may provide a measurement-related configuration parameter for the terminal device by sending measurement configuration information. The measurement configuration information may include a measurement identifier, a measurement object (measurement object, MO) identifier, a reporting configuration identifier, specific configuration information content, and the like. The configuration information content includes measurement object information and reporting configuration information. One measurement identifier may correspond to one measurement object and one reporting configuration, or a plurality of measurement identifiers may correspond to a plurality of measurement objects and one reporting configuration. In other words, each of the plurality of measurement identifiers corresponds to different measurement objects but corresponds to a same reporting configuration, or the plurality of measurement identifiers may correspond to one measurement object and a plurality of reporting configurations, that is, each of the plurality of measurement identifiers corresponds to a same measurement object but corresponds to different reporting configurations. The measurement object identifier corresponds to one measurement object configuration item, and the measurement object configuration item may include a measurement frequency, a measurement bandwidth, a frequency-related offset, a cell list, a cell blacklist, and the like that need to be measured. The reporting configuration identifier corresponds to one measurement report configuration item, and the measurement report configuration item may include an event that needs to be measured, a related event parameter, a cycle of periodic reporting, and/or the like.

For ease of understanding, the following embodiments of this application are mainly described by using an example in which the measurement configuration information includes a measurement object and a first measurement event associated with the measurement object. In other words, the network device may send the measurement configuration information to the terminal device, and correspondingly the terminal device receives the measurement configuration information from the network device. The measurement configuration information includes the measurement object and the first measurement event associated with the measurement object.

The measurement object is a carrier on which a first cell is located, and the first measurement event indicates that the first cell changes. It should be noted that the carrier on which the first cell is located may be a frequency or the like. This is not limited herein. The first measurement event may be a defined new event, or the first measurement event may be a historical event or an existing event. For example, the historical event or the existing event may be an A2 event defined in Clause 5.5.4.3 in TS38.331. This is not limited herein.

That the first cell changes includes at least one of the following cases: The first cell changes from detectable to undetectable, the first cell changes from undetectable to detectable, or a beam of the first cell changes. In other words, the first measurement event may indicate that the first cell changes from detectable to undetectable, and/or the first measurement event may indicate that the first cell changes from undetectable to detectable, and/or the first measurement event may indicate that the beam of the first cell changes, and/or the like. This is not limited herein.

The first cell may be a serving cell. For example, the serving cell may be an SCell. This is not limited herein. Alternatively, the first cell may be a non-serving cell specified by the network device. In other words, the network device may send second information to the terminal device, and correspondingly the terminal device receives the second information from the network device. The second information indicates one or more non-serving cells. The terminal device determines, based on a measurement result of the non-serving cell that is indicated by the network device, whether the first measurement event is triggered. The method may be used in a case in which the network configures a non-serving cell as an SCell and configures a status of the SCell as "activated" during configuration, that is, the SCell is directly activated.

S202: The terminal device determines, based on a first measurement result of measuring the first cell on the carrier, whether the first measurement event is triggered.

In some feasible implementations, the terminal device may determine, based on the first measurement result of measuring the first cell on the carrier, whether the first measurement event is triggered. In other words, the terminal device may measure the first cell on the carrier based on the received measurement configuration information, to obtain the first measurement result, and then determine, based on the first measurement result, whether the first measurement event is triggered. A measurement result (for example, the first measurement result or a second measurement result) of the first cell may be at least one of the following parameters: reference signal received power (reference signal received power, RSRP), reference signal received quality (reference signal received quality, RSRQ), a signal to interference plus noise ratio (signal to interference plus noise ratio, SINR), and the like. This is not limited herein. It should be noted that the second measurement result in this embodiment of this application is a measurement result latest reported to the network device, that is, the second measurement result is a measurement result latest reported to the network device before the first measurement result. Optionally, the first measurement result and the second measurement result are measurement results corresponding to a same measurement identifier.

The following separately describes several cases of determining, based on the first measurement result, whether the first measurement event is triggered.

Case 1: When the first measurement event indicates that the first cell changes from detectable to undetectable, an implementation of determining, based on the first measurement result, whether the first measurement event is triggered may be understood as Manner 1-1 to Manner 1-3:

### Manner 1-1:

1. When the first measurement result of the first cell is less than or equal to a first preset threshold or the first cell is undetectable, it is determined that the first measurement event is triggered; otherwise, it is considered that the first measurement event is not triggered, that is, when the first measurement result of the first cell is greater than the first preset threshold or the first cell is detectable, it is determined that the first measurement event is not triggered.
2. Alternatively, when the first measurement result of the first cell is less than the first preset threshold or the first cell is undetectable, it is determined that the first measurement event is triggered; otherwise, it is considered that the first measurement event is not triggered, that is, when the first measurement result of the first cell is greater than or equal to the first preset threshold or the first cell is detectable, it is determined that the first measurement event is not triggered.

For example, the measurement result of the first cell is RSRP, and the first preset threshold is -120 dBm. It is assumed that the first measurement result is -125 dBm. Because -125 dBm < -120 dBm, it may be determined that the first measurement event is triggered. Alternatively, it is assumed that the first measurement result is -115 dBm. Because -115 dBm > -120 dBm, it may be determined that the first measurement event is not triggered. The first preset threshold may be predefined in a standard, or may be configured by the network device.

It should be noted that the foregoing implementation of determining, when it is determined the first cell is undetectable, that the first measurement event is triggered may alternatively be a private implementation of the terminal device. For example, the terminal device cannot detect the first cell based on a cell identification algorithm of the terminal device, and therefore may determine that the first cell is undetectable. Correspondingly, the foregoing implementation of determining, when it is determined the first cell is detectable, that the first measurement event is not triggered may alternatively be a private implementation of the terminal device. For example, the terminal device detects the first cell based on the cell identification algorithm of the terminal device, and therefore may determine that the first cell is detectable. Generally, when the terminal device performs the private implementation, if a related cell identification condition defined in the standard is met, the terminal device should determine that the first cell is detectable. When an actual condition of the first cell is lower than the related cell identification condition defined in the standard, the terminal device may also determine that the first cell is detectable.

### Manner 1-2:

1. When the second measurement result is greater than the first preset threshold or the first cell is detectable, and the first measurement result is less than or equal to the first preset threshold or the first cell is undetectable, it is determined that the first measurement event is triggered; otherwise, it is considered that the first measurement event is not triggered, that is, when the second measurement result is less than or equal to the first preset threshold, and/or the first measurement result is greater than the first preset threshold, it is determined that the first measurement event is not triggered.
2. Alternatively, when the second measurement result is greater than or equal to the first preset threshold or the first cell is detectable, and the first measurement result is less than or equal to the first preset threshold or the first cell is undetectable, it is determined that the first measurement event is triggered; otherwise, it is considered that the first measurement event is not triggered, that is, when the second measurement result is less than the first preset threshold, and/or the first measurement result is greater than the first preset threshold, it is determined that the first measurement event is not triggered.
3. Alternatively, when the second measurement result is greater than the first preset threshold or the first cell is detectable, and the first measurement result is less than the first preset threshold or the first cell is undetectable, it is determined that the first measurement event is triggered; otherwise, it is considered that the first measurement event is not triggered, that is, when the second measurement result is less than or equal to the first preset threshold, and/or the first measurement result is greater than or equal to the first preset threshold, it is determined that the first measurement event is not triggered.
4. Alternatively, when the second measurement result is greater than or equal to the first preset threshold or the first cell is detectable, and the first measurement result is less than the first preset threshold or the first cell is undetectable, it is determined that the first measurement event is triggered; otherwise, it is considered that the first measurement event is not triggered, that is, when the second measurement result is less than the first preset threshold, and/or the first measurement result is greater than or equal to the first preset threshold, it is determined that the first measurement event is not triggered.

For example, the measurement result of the first cell is RSRQ, and the first preset threshold is 5 dB. It is assumed that the first measurement result is 4 dB, and the second measurement result is 10 dB. Because 10 dB > 5 dB, and 4 dB < 5 dB, it may be determined that the first measurement event is triggered. Alternatively, it is assumed that the second measurement result is 3 dB. Because 3 dB < 5 dB, it may be determined that the first measurement event is not triggered.

### Manner 1-3:

1. When all first measurement results of the first cell within first preset time are less than or equal to the first preset threshold or the first cell is undetectable, it is determined that the first measurement event is triggered; otherwise, it is considered that the first measurement event is not triggered, that is, when a first measurement result corresponding to any moment within the first preset time is greater than the first preset threshold or the first cell is detectable, it is determined that the first measurement event is not triggered.
2. Alternatively, when all the first measurement results of the first cell within the first preset time are less than the first preset threshold or the first cell is undetectable, it is determined that the first measurement event is triggered; otherwise, it is considered that the first measurement event is not triggered, that is, when a first measurement result corresponding to any moment within the first preset time is greater than or equal to the first preset threshold or the first cell is detectable, it is determined that the first measurement event is not triggered.

In other words, when the first cell is undetectable within the first preset time (for example, within the latest [X]s), or the first measurement result of the first cell is below the first preset threshold, it may be determined that the first measurement event is triggered; otherwise, it is considered that the first measurement event is not triggered. The first preset time may be predefined in the standard, or may be configured by the network device.

For example, the measurement result of the first cell is RSRQ, and the first preset threshold is 5 dB. It is assumed that first measurement results obtained through measurement within the latest 5s are 2 dB, 3 dB, and 2 dB respectively. Because 2 dB, 3 dB, and 2 dB are all less than 5 dB, it may be determined that the first measurement event is triggered. It is assumed that the first measurement results obtained through measurement within the latest 5s are 2 dB, 3 dB, and 10 dB respectively. Because 10 dB > 5 dB, it may be determined that the first measurement event is not triggered.

Optionally, when the first measurement event indicates that the first cell changes from detectable to undetectable, one or more conditions that are used to determine that the first measurement event is triggered and that are described in Manner 1-1 to Manner 1-3 in Case 1 may be understood as an entering condition of the first measurement event.

Case 2: When the first measurement event indicates that the first cell changes from undetectable to detectable, an implementation of determining, based on the first measurement result, whether the first measurement event is triggered may be understood as Manner 2-1 to Manner 2-3:

### Manner 2-1:

1. When the first measurement result of the first cell is greater than a second preset threshold or the first cell is detectable, it is determined that the first measurement event is triggered; otherwise, it is considered that the first measurement event is not triggered, that is, when the first measurement result of the first cell is less than or equal to the second preset threshold or the first cell is undetectable, it is determined that the first measurement event is not triggered.
2. Alternatively, when the first measurement result of the first cell is greater than or equal to the second preset threshold or the first cell is detectable, it is determined that the first measurement event is triggered; otherwise, it is considered that the first measurement event is not triggered, that is, when the first measurement result of the first cell is less than the second preset threshold or the first cell is undetectable, it is determined that the first measurement event is not triggered. The first preset threshold may be the same as the second preset threshold, or the first preset threshold may be different from the second preset threshold. This is not limited herein.

For example, the measurement result of the first cell is an SINR, and the second preset threshold is -6 dB. It is assumed that the first measurement result is -3 dB. Because -3 dB > -6 dB, it may be determined that the first measurement event is triggered. Alternatively, it is assumed that the first measurement result is -10 dB. Because -10 dB < -6 dB, it may be determined that the first measurement event is not triggered.

It should be noted that, for an understanding of determining, by the terminal device based on the private implementation of the terminal device, whether the first cell is detectable, refer to the foregoing descriptions of the private implementation. Details are not described herein again.

### Manner 2-2:

1. When the second measurement result is less than or equal to the second preset threshold or the first cell is undetectable, and the first measurement result is greater than the second preset threshold or the first cell is detectable, it is determined that the first measurement event is triggered; otherwise, it is considered that the first measurement event is not triggered, that is, when the second measurement result is greater than the second preset threshold, and/or the first measurement result is less than or equal to the second preset threshold, it is determined that the first measurement event is not triggered.
2. Alternatively, when the second measurement result is less than the second preset threshold or the first cell is undetectable, and the first measurement result is greater than the second preset threshold or the first cell is detectable, it is determined that the first measurement event is triggered; otherwise, it is considered that the first measurement event is not triggered, that is, when the second measurement result is greater than or equal to the second preset threshold, and/or the first measurement result is less than or equal to the second preset threshold, it is determined that the first measurement event is not triggered.
3. Alternatively, when the second measurement result is less than or equal to the second preset threshold or the first cell is undetectable, and the first measurement result is greater than or equal to the second preset threshold or the first cell is detectable, it is determined that the first measurement event is triggered; otherwise, it is considered that the first measurement event is not triggered, that is, when the second measurement result is greater than the second preset threshold, and/or the first measurement result is less than the second preset threshold, it is determined that the first measurement event is not triggered.
4. Alternatively, when the second measurement result is less than the second preset threshold or the first cell is undetectable, and the first measurement result is greater than or equal to the second preset threshold or the first cell is detectable, it is determined that the first measurement event is triggered; otherwise, it is considered that the first measurement event is not triggered, that is, when the second measurement result is greater than or equal to the second preset threshold, and/or the first measurement result is less than the second preset threshold, it is determined that the first measurement event is not triggered.

For example, the measurement result of the first cell is an SINR, and the second preset threshold is -6 dB. It is assumed that the first measurement result is -3 dB, and the second measurement result is -10 dB. Because -10 dB < -6 dB, and -3 dB > -6 dB, it may be determined that the first measurement event is triggered. Alternatively, it is assumed that the first measurement result is -12 dB, and the second measurement result is -4 dB. Because -4 dB > -6 dB, and -12 dB < -6 dB, it may be determined that the first measurement event is not triggered.

It should be noted that, for an understanding of determining, by the terminal device based on the private implementation of the terminal device, whether the first cell is detectable, refer to the foregoing descriptions of the private implementation. Details are not described herein again.

### Manner 2-3:

1. When all first measurement results of the first cell within first preset time are greater than the second preset threshold or the first cell is detectable, it is determined that the first measurement event is triggered; otherwise, it is considered that the first measurement event is not triggered, that is, when a first measurement result corresponding to any moment within the first preset time is less than or equal to the second preset threshold or the first cell is undetectable, it is determined that the first measurement event is not triggered.
2. Alternatively, when all the first measurement results of the first cell within the first preset time are greater than or equal to the second preset threshold or the first cell is detectable, it is determined that the first measurement event is triggered; otherwise, it is considered that the first measurement event is not triggered, that is, when a first measurement result corresponding to any moment within the first preset time is less than the second preset threshold or the first cell is undetectable, it is determined that the first measurement event is not triggered.

In other words, when the first cell is detectable within the first preset time (for example, within the latest [X]s), or the first measurement result of the first cell is above the second preset threshold, it may be determined that the first measurement event is triggered; otherwise, it is considered that the first measurement event is not triggered.

For example, the measurement result of the first cell is an SINR, and the second preset threshold is -6 dB. It is assumed that first measurement results obtained through measurement within the latest 5s are -1 dB, -2 dB, and -2 dB respectively. Because both -1 dB and -2 dB are greater than -6 dB, it may be determined that the first measurement event is triggered. It is assumed that the first measurement results obtained through measurement within the latest 5s are -3 dB, - 5 dB, and -7 dB respectively. Because -7 dB < -6 dB, it may be determined that the first measurement event is not triggered.

It should be noted that, when the first measurement event indicates that the first cell changes from undetectable to detectable, one or more conditions that are used to determine that the first measurement event is triggered and that are described in Manner 2-1 to Manner 2-3 in Case 2 may be understood as an entering condition of the first measurement event.

Optionally, the implementation described in Case 1 and the implementation described in Case 2 may be respectively used as an entering condition and a leaving condition of a measurement event, to indicate the terminal device to report a case in which the first cell changes from detectable to undetectable and report a case in which the first cell changes from undetectable to detectable. Specifically, when the first measurement event indicates that the first cell changes from detectable to undetectable, the entering condition of the first measurement event may be any condition described in Manner 1-1 to Manner 1-3, and the leaving condition of the first measurement event may be any condition described in Manner 2-1 to Manner 2-3. Therefore, when the entering condition is met, the terminal device may report the case in which the first cell changes from detectable to undetectable; and when the leaving condition is met, the terminal device reports the case in which the first cell changes from undetectable to detectable. When the first measurement event indicates that the first cell changes from undetectable to detectable, the entering condition of the first measurement event may be any condition described in Manner 2-1 to Manner 2-3, and the leaving condition of the first measurement event may be any condition described in Manner 1-1 to Manner 1-3. Therefore, when the entering condition is met, the terminal device may report the case in which the first cell changes from undetectable to detectable; and when the leaving condition is met, the terminal device reports the case in which the first cell changes from detectable to undetectable.

Case 3: When the first measurement event indicates that the beam of the first cell changes, an implementation of determining, based on the first measurement result, whether the first measurement event is triggered may be understood as Manner 3-1 and Manner 3-2:

### Manner 3-1:

1. When a beam measurement result of a first beam in the second measurement result is greater than a third preset threshold or the first beam is detectable, and a beam measurement result of the first beam in the first measurement result is less than or equal to the third preset threshold or the first beam is undetectable, it is determined that the first measurement event is triggered; on the contrary, when the beam measurement result of the first beam in the second measurement result is less than or equal to the third preset threshold or the first beam is undetectable, and/or the beam measurement result of the first beam in the first measurement result is greater than the third preset threshold or the first beam is detectable, it is determined that the first measurement event is not triggered.
2. Alternatively, when the beam measurement result of the first beam in the second measurement result is greater than or equal to the third preset threshold or the first beam is detectable, and the beam measurement result of the first beam in the first measurement result is less than or equal to the third preset threshold or the first beam is undetectable, it is determined that the first measurement event is triggered; on the contrary, when the beam measurement result of the first beam in the second measurement result is less than the third preset threshold or the first beam is undetectable, and/or the beam measurement result of the first beam in the first measurement result is greater than the third preset threshold or the first beam is detectable, it is determined that the first measurement event is not triggered.
3. Alternatively, when the beam measurement result of the first beam in the second measurement result is greater than the third preset threshold or the first beam is detectable, and the beam measurement result of the first beam in the first measurement result is less than the third preset threshold or the first beam is undetectable, it is determined that the first measurement event is triggered; on the contrary, when the beam measurement result of the first beam in the second measurement result is less than or equal to the third preset threshold or the first beam is undetectable, and/or the beam measurement result of the first beam in the first measurement result is greater than or equal to the third preset threshold or the first beam is detectable, it is determined that the first measurement event is not triggered.
4. Alternatively, when the beam measurement result of the first beam in the second measurement result is greater than or equal to the third preset threshold or the first beam is detectable, and the beam measurement result of the first beam in the first measurement result is less than the third preset threshold or the first beam is undetectable, it is determined that the first measurement event is triggered; on the contrary, when the beam measurement result of the first beam in the second measurement result is less than the third preset threshold or the first beam is undetectable, and/or the beam measurement result of the first beam in the first measurement result is greater than or equal to the third preset threshold or the first beam is detectable, it is determined that the first measurement event is not triggered. The third preset threshold in Manner 3-1 may be an absolute threshold or the like. This is not limited herein. The third preset threshold may be predefined in the standard, or may be configured by the network device.

In other words, when a beam measurement result, in a measurement result (that is, the second measurement result) of the first cell that is previously reported, of a beam or several beams in a measurement result (that is, the first measurement result) of current measurement is less than an absolute threshold or becomes undetectable, it may be determined that the first measurement event is triggered; otherwise, it is considered that the first measurement event is not triggered.

It should be noted that, in this application, a reference signal used for beam measurement may be an SSB, a CSI-RS, or the like. This is not limited herein. For ease of description, an SSB beam-level measurement result is used as an example for description in the following examples.

For example, the first measurement result and the second measurement result are RSRQ, the third preset threshold is 10 dB, the second measurement result includes SSB1, SSB2, and SSB3, and beam quality of SSB1, SSB2, and SSB3 is 7 dB, 7 dB, and 10 dB respectively. It is assumed that the first measurement result includes SSB1, and the beam quality of SSB1 is 3 dB. Because 3 dB < 10 dB, it may be determined that the first measurement event is triggered. Alternatively, it is assumed that the first measurement result includes SSB1 and SSB2, and beam quality of SSB1 and SSB2 is 13 dB and 11 dB respectively. Because both 13 dB and 11 dB are greater than 10 dB, it may be determined that the first measurement event is not triggered.

### Manner 3-2:

1. When a beam measurement result of a second beam in the first measurement result is greater than the third preset threshold, and the second measurement result includes no beam measurement result of the second beam, it is determined that the first measurement event is triggered; on the contrary, when a beam measurement result, in the first measurement result, of the second beam included in the second measurement result is less than or equal to the third preset threshold, it is determined that the first measurement event is not triggered.
2. Alternatively, when the beam measurement result of the second beam in the first measurement result is greater than or equal to the third preset threshold, and the second measurement result includes no beam measurement result of the second beam, it is determined that the first measurement event is triggered; on the contrary, when a beam measurement result, in the first measurement result, of the second beam included in the second measurement result is less than the third preset threshold, it is determined that the first measurement event is not triggered.

In other words, when a beam measurement result of a new beam in a measurement result (that is, the first measurement result) of current measurement is greater than an absolute threshold or a relative threshold, it may be determined that the first measurement event is triggered. Herein, the new beam may be understood as a beam that exists in the first measurement result but does not exist in the second measurement result.

The third preset threshold in Manner 3-2 may be an absolute threshold, a relative threshold, or the like. This is not limited herein. For example, the absolute threshold may be set to 6 dB or 10 dB, and the relative threshold may be understood as a value determined based on the beam measurement result in the second measurement result. For example, the relative threshold may be set to a value of a best beam measurement result in the second measurement result plus 3 dB. For ease of understanding, an example in which the third preset threshold is an absolute threshold is used for description below.

For example, the first measurement result and the second measurement result are RSRQ, the third preset threshold is 10 dB, the second measurement result includes SSB1, SSB2, and SSB3, and beam quality of SSB1, SSB2, and SSB3 is 7 dB, 7 dB, and 10 dB respectively. It is assumed that the first measurement result includes SSB1, SSB2, and SSB5, and the beam quality of SSB5 is 12 dB. Because 12 dB > 10 dB, it may be determined that the first measurement event is triggered. Alternatively, it is assumed that the first measurement result includes SSB1, SSB2, and SSB5, and the beam quality of SSB5 is 8 dB. Because 8 dB < 10 dB, it may be determined that the first measurement event is not triggered.

It should be noted that Manner 3-1 and Manner 3-2 may alternatively be combined to form Manner 3-3, that is, Manner 3-3: When a beam measurement result, in a measurement result (that is, the second measurement result) of the first cell that is previously reported, of a beam or several beams in a measurement result (that is, the first measurement result) of current measurement is less than an absolute threshold or becomes undetectable, and a beam measurement result of a new beam in the measurement result (that is, the first measurement result) of the current measurement is greater than an absolute threshold or a relative threshold, it may be determined that the first measurement event is triggered.

For example, the first measurement result and the second measurement result are RSRQ, the third preset threshold is 10 dB, the second measurement result includes SSB1, SSB2, and SSB3, and beam quality of SSB1, SSB2, and SSB3 is 7 dB, 7 dB, and 10 dB respectively. It is assumed that the first measurement result includes SSB1, SSB2, SSB4, and SSB5, and beam quality of SSB1, SSB2, SSB4, and SSB5 is 3 dB, 2 dB, 4 dB, and 20 dB respectively. Because the beam quality of SSB5 is greater than 10 dB, it may be determined that the first measurement event is triggered.

S203: If the terminal device determines that the first measurement event is triggered, the terminal device sends a measurement report to the network device.

In some feasible implementations, if the terminal device determines that the first measurement event is triggered, the terminal device may send the measurement report to the network device. Correspondingly, the network device receives the measurement report. The measurement report may indicate that the first measurement event is triggered. The measurement report may include the first measurement result, or that the entering condition or the leaving condition of the first measurement event is triggered, or the like. This is not limited herein.

Optionally, in some feasible implementations, when the network device needs to activate the first cell, the network device may send, to the terminal device, a command (that is, an activation command) used to activate the first cell. Correspondingly, the terminal device may receive, from the network device, the command used to activate the first cell. Then, the terminal device may determine an activation manner of the first cell based on a status of the first cell, and activate the first cell in the corresponding activation manner. It should be noted that, in this embodiment of this application, the status of the first cell may be determined based on a trigger result of the first measurement event. The status of the first cell may include a state KNOWN, a state UNKNOWN, a state UNAVAILABLE, or the like. This is not limited herein.

The state UNAVAILABLE may also be referred to as a state ACTIVATION UNAVAILABLE, that is, the first cell cannot be used for data transmission. Therefore, if the terminal device determines that the first cell is in a state UNAVAILABLE, after receiving the activation command, the terminal device may not activate the first cell, and an activation delay requirement defined for a known or unknown SCell does not need to be met. When the terminal device determines that the first cell is in a state KNOWN, the terminal device may activate the first cell in an activation manner corresponding to the state KNOWN, and an activation delay requirement defined for a known SCell is met. When the terminal device determines that the first cell is in a state UNKNOWN, the terminal device activates the first cell in an activation manner corresponding to the state UNKNOWN, and an activation delay requirement defined for an unknown SCell is met.

Optionally, in a possible implementation, when the network device determines that the first cell is in a state UNAVAILABLE, the network device may also not send, to the terminal device, the command used to activate the first cell, that is, the activation command.

Optionally, in some feasible implementations, before the network device sends, to the terminal device, the command used to activate the first cell, the network device may further send first information to the terminal device, and correspondingly the terminal device receives the first information. The first information indicates the terminal device to determine the status of the first cell based on the trigger result of the first measurement event. Optionally, the network device indicates a specific measurement identifier, where the measurement identifier corresponds to a measurement object of the first cell and first measurement time. The terminal device determines the status of the first cell based on the first measurement result corresponding to the measurement identifier. In other words, the network device may indicate, by using the first information, the terminal device to determine the status of the first cell based on the first measurement event, so that the terminal device determines how to determine the status of the first cell when subsequently receiving the activation command, for example, determines the status of the first cell based on the trigger result of the first measurement event, or determines the status of the first cell based on whether the measurement result of the first cell is reported within a period of time. It may be understood that the network device may send RRC signaling or a media access control (media access control, MAC) control element (control element, CE) including the first information to the terminal device, or the network device may send the measurement configuration information including the first information to the terminal device. In other words, in addition to the measurement object and the first measurement event associated with the measurement object, the measurement configuration information may further include the first information.

Optionally, for the terminal device, it may be specified that the terminal device reports a 1^{st} measurement result of the first cell by default in a 1^{st} measurement cycle after a measurement configuration (that is, the measurement configuration information) takes effect. In other words, in the 1^{st} measurement cycle after the measurement configuration information takes effect, regardless of whether the first measurement event in the measurement configuration information is triggered, the terminal device needs to report the 1^{st} measurement result of the first cell to the network device. Further, the 1^{st} measurement result of the first cell obtained in the 1^{st} measurement cycle may be used as an initialization measurement result of the first cell, to subsequently determine, in a 2^{nd} measurement cycle based on comparison between a measurement result in the 2^{nd} measurement cycle and the initialization measurement result, whether to trigger measurement reporting in the 2^{nd} measurement cycle.

Optionally, if it is not specified that the terminal device reports the measurement result of the first cell by default as the initialization measurement result of the first cell in the 1^{st} measurement cycle after the measurement configuration (that is, the measurement configuration information) takes effect, the terminal device and the network device may consider by default that an initialization state of the first cell is a state KNOWN, that is, the first cell is in a state KNOWN by default when there is no reporting of the terminal device.

From perspectives of the terminal device and the network device, implementations in which the terminal device and the network device specifically determine the status of the first cell based on the trigger result of the first measurement event are separately described below. It may be understood that the trigger result of the first measurement event includes that the first measurement event is triggered or the first measurement event is not triggered. The following implementations may exist independently, or may be combined with another manner. This is not limited herein.

For the terminal device:
Manner 1: When the first measurement event indicates that the first cell changes from detectable to undetectable, if the first measurement event is not triggered, the terminal device determines that the first cell is in a state KNOWN.

Optionally, in Manner 1, the terminal device needs to meet an activation delay requirement of the first cell in a state KNOWN.

Manner 2: When the first measurement event indicates that the first cell changes from detectable to undetectable, if the first measurement event is triggered, the terminal device determines that the first cell is in a state UNAVAILABLE.

Optionally, in Manner 2, the terminal device does not need to meet an activation delay requirement of the first cell.

Manner 3: When the first measurement event indicates that the first cell changes from undetectable to detectable, if the first measurement event is triggered, the terminal device determines that the first cell is in a state KNOWN.

Optionally, in Manner 3, the terminal device needs to meet an activation delay requirement of the first cell in a state KNOWN.

Manner 4: When the first measurement event indicates that the first cell changes from detectable to undetectable, if the first measurement event is not triggered, and a measurement cycle of the measurement object is less than or equal to a fourth preset threshold, the terminal device determines that the first cell is in a state KNOWN.

Optionally, in Manner 4, the terminal device needs to meet an activation delay requirement of the first cell in a state KNOWN.

Manner 5: When the first measurement event indicates that the first cell changes from detectable to undetectable, if the first measurement event is not triggered, and a measurement cycle of the measurement object is greater than or equal to a fourth preset threshold, the terminal device determines that the first cell is in a state UNKNOWN.

Optionally, in Manner 5, the terminal device needs to meet an activation delay requirement of the first cell in a state UNKNOWN.

Manner 6: When the first measurement event indicates that the first cell changes from undetectable to detectable, if the first measurement event is triggered, and a measurement cycle of the measurement object is less than or equal to a fourth preset threshold, the terminal device determines that the first cell is in a state KNOWN.

Optionally, in Manner 6, the terminal device needs to meet an activation delay requirement of the first cell in a state KNOWN.

Manner 7: When the first measurement event indicates that the first cell changes from undetectable to detectable, if the first measurement event is triggered, and a measurement cycle of the measurement object is greater than or equal to a fourth preset threshold, the terminal device determines that the first cell is in a state UNKNOWN.

Optionally, in Manner 7, the terminal device needs to meet an activation delay requirement of the first cell in a state UNKNOWN.

In addition to the trigger result of the first measurement event, the terminal device may further determine the status of the first cell with reference to another condition, for example, a definition that the first cell remains detectable during a cell activation delay in TS38.133 currently. Correspondingly, for the network device:
Manner 1: When the first measurement event indicates that the first cell changes from detectable to undetectable, and no measurement report is received from the terminal device, the network device determines that the first cell is in a state KNOWN.
Manner 2: When the first measurement event indicates that the first cell changes from detectable to undetectable, and the measurement report is received from the terminal device, the network device determines that the first cell is in a state UNAVAILABLE.
Manner 3: When the first measurement event indicates that the first cell changes from undetectable to detectable, and the measurement report is received from the terminal device, the network device determines that the first cell is in a state KNOWN.
Manner 4: When the first measurement event indicates that the first cell changes from detectable to undetectable, no measurement report is received from the terminal device, and it is determined that the measurement cycle of the measurement object is less than or equal to the fourth preset threshold, the network device determines that the first cell is in a state KNOWN.
Manner 5: When the first measurement event indicates that the first cell changes from detectable to undetectable, no measurement report is received from the terminal device, and it is determined that the measurement cycle of the measurement object is greater than or equal to the fourth preset threshold, the network device determines that the first cell is in a state UNKNOWN.
Manner 6: When the first measurement event indicates that the first cell changes from undetectable to detectable, the measurement report is received from the terminal device, and it is determined that the measurement cycle of the measurement object is less than or equal to the fourth preset threshold, the network device determines that the first cell is in a state KNOWN.
Manner 7: When the first measurement event indicates that the first cell changes from undetectable to detectable, the measurement report is received from the terminal device, and it is determined that the measurement cycle of the measurement object is greater than or equal to the fourth preset threshold, the network device determines that the first cell is in a state UNKNOWN.

It should be noted that, if the network device receives the measurement report from the terminal device, the network device may determine that the first measurement event is triggered, that is, the measurement report may indicate that the first measurement event is triggered. If the network device receives no measurement report from the terminal device, the network device may determine that the first measurement event is not triggered.

Optionally, in some feasible implementations, when the first measurement event indicates that the beam of the first cell changes, if the terminal device determines, based on the first measurement result obtained through measurement based on the measurement configuration information, that the first measurement event is triggered, the terminal device may send the measurement report to the network device. Correspondingly, the network device receives the measurement report from the terminal device. The measurement report indicates that the first measurement event is triggered, the measurement report may include the first measurement result, and the first measurement result includes a beam measurement result of the beam. Further, the network device may update, based on the first measurement event, a beam used when the first cell is activated. In other words, after the network device receives the measurement report, based on the beam measurement result included in the first measurement result, the network device may determine a transmit beam that should be used to send a reference signal such as a CSI-RS or a tracking reference signal (tracking reference signal, TRS) to the terminal device in an activation process of the first cell, to assist the terminal device in completing the activation, and determine a transmit beam that should be used to perform data scheduling on the terminal device after the activation.

For example, assuming that the first measurement result in the measurement report includes SSB1, SSB2, SSB4, and SSB5, and beam quality of SSB1, SSB2, SSB4, and SSB5 is 3 dB, 2 dB, 4 dB, and 10 dB respectively, the network device may send, by using SSB5, the reference signal such as the CSI-RS or the TRS to the terminal device in the activation process, to assist the terminal device in activating the first cell, or perform, by using SSB5, data scheduling on the terminal device after the first cell is activated.

In this application, the first measurement event indicating that the first cell changes is defined. Therefore, when the trigger condition of the first measurement event is met, the terminal device can report the measurement report corresponding to the first measurement event. This reduces signaling overheads of measurement reporting before the first cell is activated and reduces power consumption of the terminal device. Specifically, in this application, that the first cell changes may include: the first cell changes from detectable to undetectable, the first cell changes from undetectable to detectable, or the beam of the first cell changes. When the first measurement event indicates that the first cell changes from detectable to undetectable, or the first cell changes from undetectable to detectable, the terminal device or the network device may further determine the status of the first cell based on the first measurement event, to subsequently determine, based on different states of the first cell, different activation manners to activate the first cell. For example, when determining that the first cell is in a state KNOWN, the terminal device may activate the first cell based on an activation manner corresponding to the state KNOWN. This can skip steps of automatic gain control and coarse timing cell search, and greatly reduce activation time. When the first measurement event indicates that the beam of the first cell changes, the network device may further determine, based on the first measurement event, a transmit beam used in an activation process, or determine a transmit beam used for scheduling the terminal device after activation. This helps improve communication quality.

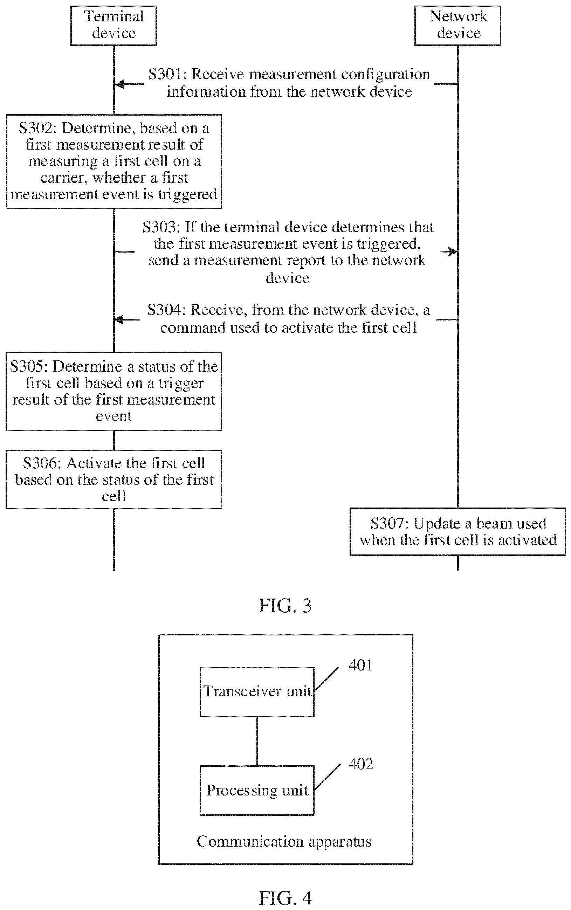

To make a solution in a cell activation scenario clearer, the following further describes a solution in this application with reference to a flowchart in FIG. 3.

FIG. 3 is another schematic flowchart of a communication method according to an embodiment of this application.

S301: A terminal device receives measurement configuration information from a network device.

S302: The terminal device determines, based on a first measurement result of measuring a first cell on a carrier, whether a first measurement event is triggered.

S303: If the terminal device determines that the first measurement event is triggered, the terminal device sends a measurement report to the network device.

For specific implementations of step S301 to step S303, refer to the descriptions of step 201 to step 203 in FIG. 2. Details are not described herein again.

S304: The terminal device receives, from the network device, a command used to activate the first cell.

In some feasible implementations, when the network device needs to activate the first cell, the network device may send, to the terminal device, the command (that is, an activation command) used to activate the first cell. Correspondingly, the terminal device may receive, from the network device, the command used to activate the first cell. Optionally, in an implementation, when the network device determines that the first cell is in a state UNAVAILABLE, the network device may also not send, to the terminal device, the command used to activate the first cell.

Optionally, in some feasible implementations, before the network device sends, to the terminal device, the command used to activate the first cell, the network device may further send first information to the terminal device, and correspondingly the terminal device receives the first information. The first information indicates the terminal device to determine a status of the first cell based on a trigger result of the first measurement event. Optionally, the network device indicates a specific measurement identifier, where the measurement identifier corresponds to a measurement object of the first cell and first measurement time. The terminal device determines the status of the first cell based on the first measurement result corresponding to the measurement identifier. In other words, the network device may indicate, by using the first information, the terminal device to determine the status of the first cell based on the first measurement event, so that the terminal device determines how to determine the status of the first cell when subsequently receiving the activation command, for example, determines the status of the first cell based on the trigger result of the first measurement event, or determines the status of the first cell based on whether the measurement result of the first cell is reported within a period of time. It may be understood that the network device may send RRC signaling or a media access control MAC CE including the first information to the terminal device, or the network device may send the measurement configuration information including the first information to the terminal device. In other words, in addition to the measurement object and the first measurement event associated with the measurement object, the measurement configuration information may further include the first information. It should be noted that the first measurement event in this application may be a defined new event, or the first measurement event may be a historical event or an existing event. For example, the historical event or the existing event may be an A2 event defined in Clause 5.5.4.3 in TS38.331. This is not limited herein. In other words, in this application, the status of the first cell may be determined by defining a new event or reusing a historical event and based on a trigger result of the new event or the historical event.

S305: The terminal device determines the status of the first cell based on the trigger result of the first measurement event.

For a specific implementation of step S305, refer to Manner 1 to Manner 7 described in step S203 in FIG. 2. Details are not described herein again.

S306: The terminal device activates the first cell based on the status of the first cell.

It should be noted that, after receiving the activation command, if the terminal device determines that the first cell is in a state KNOWN, the terminal device may activate the first cell in an activation manner corresponding to the state KNOWN; if the terminal device determines that the first cell is in a state UNKNOWN, the terminal device may activate the first cell in an activation manner corresponding to the state UNKNOWN; or if the terminal device determines that the first cell is in a state UNAVAILABLE, the terminal device may not activate the first cell after receiving the activation command.

S307: The network device updates a beam used when the first cell is activated.

It should be noted that, when the measurement report received by the network device includes the first measurement result, and the first measurement result includes a beam measurement result of the beam, the network device may update, based on the first measurement event, the beam used when the first cell is activated. In other words, after the network device receives the measurement report, based on the beam measurement result included in the first measurement result, the network device may determine a transmit beam that should be used to send a reference signal such as a CSI-RS or a TRS to the terminal device in an activation process of the first cell, to assist the terminal device in completing the activation, and determine a transmit beam that should be used to perform data scheduling on the terminal device after the activation.

It should be noted that a sequence of numbers of the steps in this embodiment of this application does not represent a sequence of performing the steps. For example, step S304 and step S305 may be simultaneously performed, or step S304 may be performed before or after step S305. For another example, step S306 and step S307 may be simultaneously performed, or step S307 may be performed after step S306. This is not limited herein.

The following describes in detail communication apparatuses provided in this application with reference to FIG. 4 to FIG. 7.

FIG. 4 is a diagram of a structure of a communication apparatus according to an embodiment of this application. The communication apparatus shown in FIG. 4 may be configured to perform some or all functions of the terminal device in the method embodiments described in FIG. 2 and FIG. 3. The apparatus may be a terminal device, an apparatus in the terminal device, or an apparatus that can be used in combination with the terminal device. The communication apparatus may alternatively be a chip system. The communication apparatus shown in FIG. 4 may include a transceiver unit 401 and a processing unit 402. The processing unit 402 is configured to perform data processing. The transceiver unit 401 is integrated with a receiving unit and a sending unit. The transceiver unit 401 may also be referred to as a communication unit. Alternatively, the transceiver unit 401 may be split into a receiving unit and a sending unit. The same goes for the processing unit 402 and the transceiver unit 401 below, and details are not described below again.

The transceiver unit 401 is configured to receive measurement configuration information from a network device, where the measurement configuration information includes a measurement object and a first measurement event associated with the measurement object, the measurement object is a carrier on which a first cell is located, and the first measurement event indicates that the first cell changes.

The processing unit 402 is configured to determine, based on a first measurement result of measuring the first cell on the carrier, whether the first measurement event is triggered.

The transceiver unit 401 is configured to: if the first measurement event is triggered, send a measurement report to the network device, where the measurement report indicates that the first measurement event is triggered.

In a possible implementation, the transceiver unit 401 is further configured to receive, from the network device, a command used to activate the first cell.

The processing unit 402 is further configured to determine a status of the first cell based on a trigger result of the first measurement event, where the status of the first cell includes a state KNOWN, a state UNKNOWN, or a state UNAVAILABLE.

In a possible implementation, that the first cell changes includes at least one of the following cases:
The first cell changes from detectable to undetectable, the first cell changes from undetectable to detectable, or a beam of the first cell changes.

In a possible implementation, the first measurement event indicates that the first cell changes from detectable to undetectable.

The determining, based on a first measurement result of measuring the first cell on the carrier, whether the first measurement event is triggered includes:
when the first measurement result of the first cell is less than or equal to a first preset threshold or the first cell is undetectable, determining that the first measurement event is triggered; or
when a second measurement result is greater than the first preset threshold or the first cell is detectable, and the first measurement result is less than or equal to the first preset threshold or the first cell is undetectable, determining that the first measurement event is triggered, where the second measurement result is a measurement result latest reported to the network device.

In a possible implementation, the first measurement event indicates that the first cell changes from undetectable to detectable.

The determining, based on a first measurement result of measuring the first cell on the carrier, whether the first measurement event is triggered includes:
when the first measurement result of the first cell is greater than a second preset threshold or the first cell is detectable, determining that the first measurement event is triggered; or
when a second measurement result is less than or equal to the second preset threshold or the first cell is undetectable, and the first measurement result is greater than the second preset threshold or the first cell is detectable, determining that the first measurement event is triggered, where the second measurement result is a measurement result latest reported to the network device.

In a possible implementation, the first measurement event indicates that the beam of the first cell changes.

The determining, based on a first measurement result of measuring the first cell on the carrier, whether the first measurement event is triggered includes:
when a beam measurement result of a first beam in a second measurement result is greater than a third preset threshold or the first beam is detectable, and a beam measurement result of the first beam in the first measurement result is less than or equal to the third preset threshold or the first beam is undetectable, determining that the first measurement event is triggered; or
when a beam measurement result of a second beam in the first measurement result is greater than the third preset threshold, and the second measurement result includes no beam measurement result of the second beam, determining that the first measurement event is triggered.

The second measurement result is a measurement result latest reported to the network device.

In a possible implementation, the first measurement event indicates that the first cell changes from detectable to undetectable.

The determining a status of the first cell based on a trigger result of the first measurement event includes:
if the first measurement event is not triggered, determining that the first cell is in a state KNOWN.

In a possible implementation, the first measurement event indicates that the first cell changes from detectable to undetectable.

The determining a status of the first cell based on a trigger result of the first measurement event includes:
if the first measurement event is triggered, determining that the first cell is in a state UNAVAILABLE.

In a possible implementation, the first measurement event indicates that the first cell changes from undetectable to detectable.

The determining a status of the first cell based on a trigger result of the first measurement event includes:
if the first measurement event is triggered, determining that the first cell is in a state KNOWN.

In a possible implementation, the first measurement event indicates that the first cell changes from detectable to undetectable.

The determining a status of the first cell based on a trigger result of the first measurement event includes:
if the first measurement event is not triggered, and a measurement cycle of the measurement object is less than or equal to a fourth preset threshold, determining that the first cell is in a state KNOWN; or
if the first measurement event is not triggered, and the measurement cycle of the measurement object is greater than the fourth preset threshold, determining that the first cell is in a state UNKNOWN.

In a possible implementation, the first measurement event indicates that the first cell changes from undetectable to detectable.

The determining a status of the first cell based on a trigger result of the first measurement event includes:
if the first measurement event is triggered, and a measurement cycle of the measurement object is less than or equal to a fourth preset threshold, determining that the first cell is in a state KNOWN; or
if the first measurement event is triggered, and the measurement cycle of the measurement object is greater than the fourth preset threshold, determining that the first cell is in a state UNKNOWN.

In a possible implementation, the transceiver unit 401 is further configured to:
receive first information from the network device, where the first information indicates the terminal device to determine the status of the first cell based on the trigger result of the first measurement event.

In a possible implementation, the first cell includes a serving cell.

In a possible implementation, the first cell includes a non-serving cell; and the transceiver unit 401 is further configured to:
receive second information from the network device, where the second information indicates the non-serving cell.

In a possible implementation, the measurement report includes the first measurement result.

For another possible implementation of the communication apparatus, refer to the related descriptions of the functions of the access network device in the method embodiments corresponding to FIG. 2 and FIG. 3. Details are not described herein again.

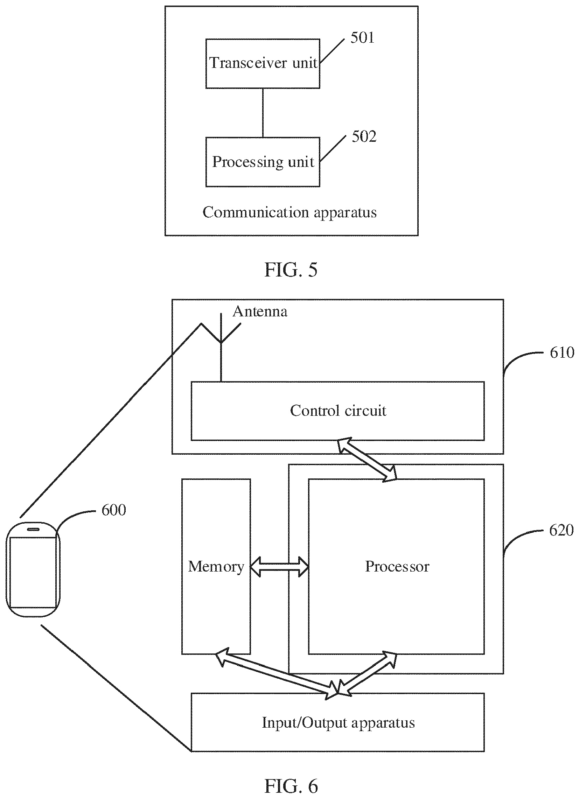

FIG. 5 is a diagram of a structure of another communication apparatus according to an embodiment of this application. The communication apparatus shown in FIG. 5 may be configured to perform some or all functions of the network device in the method embodiments described in FIG. 2 and FIG. 3. The apparatus may be a network device, an apparatus in the network device, or an apparatus that can be used in combination with the network device. The communication apparatus may alternatively be a chip system. The communication apparatus shown in FIG. 5 may include a transceiver unit 501 and a processing unit 502.

The processing unit 502 is configured to determine measurement configuration information.

The transceiver unit 501 is configured to send the measurement configuration information to a terminal device, where the measurement configuration information includes a measurement object and a first measurement event associated with the measurement object, the measurement object is a carrier on which a first cell is located, and the first measurement event indicates that the first cell changes.

In a possible implementation, the transceiver unit 501 is further configured to:
send, to the terminal device, a command used to activate the first cell.

In a possible implementation, that the first cell changes includes at least one of the following cases:

The first cell changes from detectable to undetectable, the first cell changes from undetectable to detectable, or a beam of the first cell changes.

In a possible implementation, the first measurement event indicates that the first cell changes from detectable to undetectable.

The processing unit 502 is further configured to:
when no measurement report is received from the terminal device, determine that the first cell is in a state KNOWN.

In a possible implementation, the first measurement event indicates that the first cell changes from detectable to undetectable.

The processing unit 502 is further configured to:
when a measurement report is received from the terminal device, determine that the first cell is in a state UNAVAILABLE.

In a possible implementation, the first measurement event indicates that the first cell changes from undetectable to detectable.

The processing unit 502 is further configured to:
when a measurement report is received from the terminal device, determine that the first cell is in a state KNOWN.

In a possible implementation, the first measurement event indicates that the first cell changes from detectable to undetectable.

The processing unit 502 is further configured to:
when no measurement report is received from the terminal device, and it is determined that a measurement cycle of the measurement object is less than or equal to a fourth preset threshold, determine that the first cell is in a state KNOWN; or
when no measurement report is received from the terminal device, and it is determined that the measurement cycle of the measurement object is greater than the fourth preset threshold, determine that the first cell is in a state UNKNOWN.

In a possible implementation, the first measurement event indicates that the first cell changes from undetectable to detectable.

The processing unit 502 is further configured to:
when a measurement report is received from the terminal device, and it is determined that a measurement cycle of the measurement object is less than or equal to a fourth preset threshold, determine that the first cell is in a state KNOWN; or
when the measurement report is received from the terminal device, and it is determined that the measurement cycle of the measurement object is greater than the fourth preset threshold, determine that the first cell is in a state UNKNOWN.

In a possible implementation, the first measurement event indicates that the beam of the first cell changes.

The processing unit 502 is further configured to:
update, based on the first measurement event, a beam used when the first cell is activated.

In a possible implementation, the transceiver unit 501 is further configured to:
send first information to the terminal device, where the first information indicates the terminal device to determine a status of the first cell based on a trigger result of the first measurement event.

In a possible implementation, the first cell includes a serving cell.

In a possible implementation, the first cell includes a non-serving cell; and the transceiver unit 501 is further configured to:
send second information to the terminal device, where the second information indicates the non-serving cell.

For another possible implementation of the communication apparatus, refer to the related descriptions of the functions of the access network device in the method embodiments corresponding to FIG. 2 and FIG. 3. Details are not described herein again.

FIG. 6 is a diagram of a structure of another communication apparatus according to an embodiment of this application. As shown in FIG. 6, the communication apparatus may be the terminal device described in embodiments of this application, and is configured to implement the functions of the terminal device in FIG. 2 and FIG. 3. For ease of description, FIG. 6 shows only main components of the terminal device 600. As shown in FIG. 6, the terminal device 600 includes a processor, a memory, a control circuit, an antenna, and an input/output apparatus. The processor is mainly configured to: process a communication protocol and communication data, control the entire terminal device 600, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data that is input by a user and output data to the user.

For example, the terminal device 600 is a mobile phone. After the terminal device 600 is powered on, the processor may read a software program in a storage unit, interpret and execute instructions of the software program, and process data of the software program. When data needs to be sent wirelessly, after performing baseband processing on the to-be-sent data, the processor outputs a baseband signal to the control circuit; and after performing radio frequency processing on the baseband signal, the control circuit sends a radio frequency signal in a form of an electromagnetic wave through the antenna. When data is sent to the terminal device 600, the control circuit receives a radio frequency signal through the antenna, converts the radio frequency signal into a baseband signal, and outputs the baseband signal to the processor; and the processor converts the baseband signal into data, and processes the data.

A person skilled in the art may understand that, for ease of description, FIG. 6 shows only one memory and only one processor. In some embodiments, the terminal device 600 may include a plurality of processors and a plurality of memories. The memory may also be referred to as a storage medium, a storage device, or the like. This is not limited in embodiments of the present invention.

In an optional implementation, the processor may include a baseband processor and a central processing unit. The baseband processor is mainly configured to process a communication protocol and communication data, and the central processing unit is mainly configured to: control the entire terminal device 600, execute a software program, and process data of the software program. The processor in FIG. 6 integrates functions of the baseband processor and the central processing unit. A person skilled in the art may understand that the baseband processor and the central processing unit may alternatively be processors independent of each other, and are interconnected through a technology such as a bus. The terminal device 600 may include a plurality of baseband processors to adapt to different network standards, the terminal device 600 may include a plurality of central processing units to enhance a processing capability of the terminal device 600, and components of the terminal device 600 may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 610 of the terminal device 600, and the processor having a processing function may be considered as a processing unit 620 of the terminal device 600. As shown in FIG. 6, the terminal device 600 includes the transceiver unit 610 and the processing unit 620. The transceiver unit may also be referred to as a transceiver, a transceiver machine, a transceiver apparatus, or the like. Optionally, a component that is in the transceiver unit 610 and that is configured to implement a receiving function may be considered as a receiving unit, and a component that is in the transceiver unit 610 and that is configured to implement a sending function may be considered as a sending unit. In other words, the transceiver unit 610 includes the receiving unit and the sending unit. For example, the receiving unit may also be referred to as a receiver machine, a receiver, or a receiving circuit, and the sending unit may also be referred to as a transmitter, a transmitter machine, or a transmitting circuit.

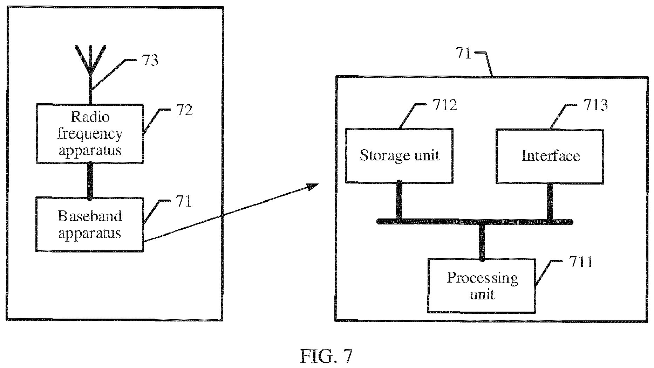

FIG. 7 is a diagram of a structure of another communication apparatus according to an embodiment of this application. As shown in FIG. 7, the communication apparatus may be the network device described in embodiments of this application, and is configured to implement the functions of the network device in FIG. 2 and FIG. 3. The network device includes a baseband apparatus 71, a radio frequency apparatus 72, and an antenna 73. In an uplink direction, the radio frequency apparatus 72 receives, through the antenna 73, information sent by the terminal device, and sends, to the baseband apparatus 71 for processing, the information sent by the terminal device. In a downlink direction, the baseband apparatus 71 processes the information of the terminal device, and sends processed information to the radio frequency apparatus 72; and the radio frequency apparatus 72 processes the information of the terminal device, and then sends processed information to the terminal device through the antenna 73.

The baseband apparatus 71 includes one or more processing units 711, a storage unit 712, and an interface 713. The processing unit 711 is configured to support the network device in performing the functions of the network device in the foregoing method embodiments. The storage unit 712 is configured to store a software program and/or data. The interface 713 is configured to exchange information with the radio frequency apparatus 72. The interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated to form a chip. The storage unit 712 and the processing unit 711 may be located in a same chip, that is, an on-chip storage element. Alternatively, the storage unit 712 and the processing unit 711 may be located in different chips from the processing unit 711, that is, an off-chip storage element. The storage unit 712 may be one memory, or may be a general term of a plurality of memories or storage elements.

The network device may implement some or all of the steps in the foregoing method embodiments in a form of scheduling a program by using one or more processing units. For example, the network device implements corresponding functions of the network device in FIG. 2 and FIG. 3. The one or more processing units may support radio access technologies of a same standard, or may support radio access technologies of different standards.

An embodiment of this application further provides a computer-readable storage medium. The computer-readable storage medium stores instructions, and when the instructions are run on a processor, the method procedure in the foregoing method embodiment is implemented.

An embodiment of this application further provides a computer program product. When the computer program product runs on a processor, the method procedure in the foregoing method embodiment is implemented.

A person of ordinary skill in the art may be aware that, in combination with the examples described in embodiments disclosed in this specification, units and steps may be implemented by using electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, that is, may be located in one place, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be used to carry or store expected program code in a form of an instruction or a data structure and that can be accessed by a computer. In addition, by way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applied to a terminal device, and comprises:
receiving measurement configuration information from a network device, wherein the measurement configuration information comprises a measurement object and a first measurement event associated with the measurement object, the measurement object is a carrier on which a first cell is located, and the first measurement event indicates that the first cell changes;
determining, based on a first measurement result of measuring the first cell on the carrier, whether the first measurement event is triggered; and
if the first measurement event is triggered, sending a measurement report to the network device, wherein the measurement report indicates that the first measurement event is triggered.

2. The method according to claim 1, wherein the method further comprises:
receiving, from the network device, a command used to activate the first cell; and
determining a status of the first cell based on a trigger result of the first measurement event, wherein the status of the first cell comprises a state KNOWN, a state UNKNOWN, or a state UNAVAILABLE.

3. The method according to claim 1 or 2, wherein that the first cell changes comprises at least one of the following cases:
the first cell changes from detectable to undetectable, the first cell changes from undetectable to detectable, or a beam of the first cell changes.

4. The method according to claim 3, wherein the first measurement event indicates that the first cell changes from detectable to undetectable; and
the determining, based on a first measurement result of measuring the first cell on the carrier, whether the first measurement event is triggered comprises:
when the first measurement result of the first cell is less than or equal to a first preset threshold or the first cell is undetectable, determining that the first measurement event is triggered; or
when a second measurement result is greater than the first preset threshold or the first cell is detectable, and the first measurement result is less than or equal to the first preset threshold or the first cell is undetectable, determining that the first measurement event is triggered, wherein the second measurement result is a measurement result latest reported to the network device.

5. The method according to claim 3, wherein the first measurement event indicates that the first cell changes from undetectable to detectable; and
the determining, based on a first measurement result of measuring the first cell on the carrier, whether the first measurement event is triggered comprises:
when the first measurement result of the first cell is greater than a second preset threshold or the first cell is detectable, determining that the first measurement event is triggered; or
when a second measurement result is less than or equal to the second preset threshold or the first cell is undetectable, and the first measurement result is greater than the second preset threshold or the first cell is detectable, determining that the first measurement event is triggered, wherein the second measurement result is a measurement result latest reported to the network device.

6. The method according to claim 3, wherein the first measurement event indicates that the beam of the first cell changes; and
the determining, based on a first measurement result of measuring the first cell on the carrier, whether the first measurement event is triggered comprises:
when a beam measurement result of a first beam in a second measurement result is greater than a third preset threshold or the first beam is detectable, and a beam measurement result of the first beam in the first measurement result is less than or equal to the third preset threshold or the first beam is undetectable, determining that the first measurement event is triggered; or
when a beam measurement result of a second beam in the first measurement result is greater than the third preset threshold, and the second measurement result comprises no beam measurement result of the second beam, determining that the first measurement event is triggered, wherein
the second measurement result is a measurement result latest reported to the network device.

7. The method according to any one of claims 2 to 4, wherein the first measurement event indicates that the first cell changes from detectable to undetectable; and
the determining a status of the first cell based on a trigger result of the first measurement event comprises:
if the first measurement event is not triggered, determining that the first cell is in a state KNOWN.

8. The method according to any one of claims 2 to 4, wherein the first measurement event indicates that the first cell changes from detectable to undetectable; and
the determining a status of the first cell based on a trigger result of the first measurement event comprises:
if the first measurement event is triggered, determining that the first cell is in a state UNAVAILABLE.

9. The method according to claim 2, 3, or 5, wherein the first measurement event indicates that the first cell changes from undetectable to detectable; and
the determining a status of the first cell based on a trigger result of the first measurement event comprises:
if the first measurement event is triggered, determining that the first cell is in a state KNOWN.

10. The method according to any one of claims 2 to 4, wherein the first measurement event indicates that the first cell changes from detectable to undetectable; and
the determining a status of the first cell based on a trigger result of the first measurement event comprises:
if the first measurement event is not triggered, and a measurement cycle of the measurement object is less than or equal to a fourth preset threshold, determining that the first cell is in a state KNOWN; or
if the first measurement event is not triggered, and the measurement cycle of the measurement object is greater than the fourth preset threshold, determining that the first cell is in a state UNKNOWN.

11. The method according to claim 2, 3, or 5, wherein the first measurement event indicates that the first cell changes from undetectable to detectable; and
the determining a status of the first cell based on a trigger result of the first measurement event comprises:
if the first measurement event is triggered, and a measurement cycle of the measurement object is less than or equal to a fourth preset threshold, determining that the first cell is in a state KNOWN; or
if the first measurement event is triggered, and the measurement cycle of the measurement object is greater than the fourth preset threshold, determining that the first cell is in a state UNKNOWN.

12. The method according to any one of claims 1 to 11, wherein the method further comprises:
receiving first information from the network device, wherein the first information indicates the terminal device to determine the status of the first cell based on the trigger result of the first measurement event.

13. The method according to any one of claims 1 to 12, wherein the first cell comprises a serving cell.

14. The method according to any one of claims 1 to 12, wherein the first cell comprises a non-serving cell; and the method further comprises:
receiving second information from the network device, wherein the second information indicates the non-serving cell.

15. The method according to any one of claims 1 to 14, wherein the measurement report comprises the first measurement result.

16. A communication method, wherein the method is applied to a network device, and comprises:
determining measurement configuration information; and
sending the measurement configuration information to a terminal device, wherein the measurement configuration information comprises a measurement object and a first measurement event associated with the measurement object, the measurement object is a carrier on which a first cell is located, and the first measurement event indicates that the first cell changes.

17. The method according to claim 16, wherein the method further comprises:
sending, to the terminal device, a command used to activate the first cell.

18. The method according to claim 16 or 17, wherein that the first cell changes comprises at least one of the following cases:
the first cell changes from detectable to undetectable, the first cell changes from undetectable to detectable, or a beam of the first cell changes.

19. The method according to claim 18, wherein the first measurement event indicates that the first cell changes from detectable to undetectable; and
the method further comprises:
when receiving no measurement report from the terminal device, determining that the first cell is in a state KNOWN.

20. The method according to claim 18, wherein the first measurement event indicates that the first cell changes from detectable to undetectable; and
the method further comprises:
when receiving a measurement report from the terminal device, determining that the first cell is in a state UNAVAILABLE.

21. The method according to claim 18, wherein the first measurement event indicates that the first cell changes from undetectable to detectable; and
the method further comprises:
when receiving a measurement report from the terminal device, determining that the first cell is in a state KNOWN.

22. The method according to claim 18, wherein the first measurement event indicates that the first cell changes from detectable to undetectable; and
the method further comprises:
when receiving no measurement report from the terminal device, and determining that a measurement cycle of the measurement object is less than or equal to a fourth preset threshold, determining that the first cell is in a state KNOWN; or
when receiving no measurement report from the terminal device, and determining that the measurement cycle of the measurement object is greater than the fourth preset threshold, determining that the first cell is in a state UNKNOWN.

23. The method according to claim 18, wherein the first measurement event indicates that the first cell changes from undetectable to detectable; and
the method further comprises:
when receiving a measurement report from the terminal device, and determining that a measurement cycle of the measurement object is less than or equal to a fourth preset threshold, determining that the first cell is in a state KNOWN; or
when receiving the measurement report from the terminal device, and determining that the measurement cycle of the measurement object is greater than the fourth preset threshold, determining that the first cell is in a state UNKNOWN.

24. The method according to claim 18, wherein the first measurement event indicates that the beam of the first cell changes; and
the method further comprises:
updating, based on the first measurement event, a beam used when the first cell is activated.

25. The method according to any one of claims 17 to 24, wherein the method further comprises:
sending first information to the terminal device, wherein the first information indicates the terminal device to determine a status of the first cell based on a trigger result of the first measurement event.

26. The method according to any one of claims 16 to 25, wherein the first cell comprises a serving cell.

27. The method according to any one of claims 16 to 25, wherein the first cell comprises a non-serving cell; and the method further comprises:
sending second information to the terminal device, wherein the second information indicates the non-serving cell.

28. A communication apparatus, comprising units or modules configured to perform the method according to any one of claims 1 to 15, or comprising units or modules configured to perform the method according to any one of claims 16 to 27.

29. A communication apparatus, comprising a processor and a transceiver, wherein the processor and the transceiver are configured to execute a computer program or instructions stored in at least one memory, so that the apparatus implements the method according to any one of claims 1 to 15 or the method according to any one of claims 16 to 27.

30. A computer-readable storage medium, wherein the storage medium stores a computer program or instructions, and when the computer program or the instructions are executed by a computer, the method according to any one of claims 1 to 15 is implemented, or the method according to any one of claims 16 to 27 is implemented.

31. A computer program product, wherein the computer program product comprises computer program code, and when the computer program code is run on a computer, the method according to any one of claims 1 to 15 is implemented, or the method according to any one of claims 16 to 27 is implemented.
